# EUROPEAN PATENT SPECIFICATION

(11) **EP 3 839 905 B1**
(45) Date of publication and mention of the grant of the patent: **03.04.2024**
(21) Application number: 20195379.1
(22) Date of filing: 09.09.2020
(51) Int. Cl.: G07G 1/00

(54) **SALES MANAGEMENT DEVICE AND CONTROL PROGRAM FOR SALES MANAGEMENT DEVICE**
VERKAUFSVERWALTUNGSVORRICHTUNG UND STEUERPROGRAMM FÜR VERKAUFSVERWALTUNGSVORRICHTUNG
DISPOSITIF DE GESTION DE VENTE ET PROGRAMME DE COMMANDE POUR DISPOSITIF DE GESTION DE VENTE

(30) Priority: 17.12.2019 JP 2019227004
(43) Date of publication of application: 23.06.2021
(73) Proprietor: Toshiba TEC Kabushiki Kaisha, Tokyo 141-8562 (JP)
(72) Inventor: SASAKI, Yuta, Shinagawa-ku, Tokyo 141-8562 (JP)
(74) Representative: Bandpay & Greuter

(56) References cited:
- EP-A1- 2 980 730
- EP-A1- 3 089 127
- CA-A1- 3 072 063
- GB-A- 2 451 073
- US-A1- 2017 323 376
- US-A1- 2018 332 235
- US-A1- 2018 373 928
- US-B1- 9 412 099
- US-B2- 11 030 675

## Description

### FIELD

Embodiments described herein relate generally to a sales management device and a control program for causing a computer to function as the sales management device.

### BACKGROUND

Various sales management systems that enable sales of commodities displayed in a store without involvement of a store clerk have been devised. A sales management system as an example of the sales management systems tracks actions of a customer with a large number of cameras set in a store and monitors commodities with sensors provided in commodity shelves and the like. The sales management system specifies commodities purchased by the customer with images photographed by the cameras and signals transmitted from the sensors and registers data of the commodities in a purchase list of the customer. The sales management system processes accounting for the customer based on the data registered in the purchase list.

In such a sales management system, for example, if two customers stand in front of a commodity shelf and one of the customers purchases a commodity in the commodity shelf, it may be sometimes difficult to specify which customer purchases the commodity. In that case, the existing sales management system specifies, with complicated information processing, the customer who picks up the commodity. Therefore, a load required for the information processing is large.

Examples of related sale management systems can be found in US2019355049, US2018373928, US2017323376 and JP-A-2018-55700.

### DESCRIPTION OF THE DRAWINGS

FIG. 1 is a block diagram illustrating a schematic configuration of a sales management system in at least one embodiment;
FIG. 2 is a block diagram illustrating a main part circuit configuration of a gate device in the system;
FIG. 3 is a block diagram illustrating a main part circuit configuration of a person tracking device in the system;
FIG. 4 is a schematic diagram illustrating a data structure of a tracking file included in the person tracking device;
FIG. 5 is a block diagram illustrating a main part circuit configuration of a commodity monitoring device in the system;
FIG. 6 is a schematic diagram illustrating a data structure of movement notification command output from the commodity monitoring device;
FIG. 7 is a block diagram illustrating a main part circuit configuration of an accounting machine in the system;
FIG. 8 is a block diagram illustrating a main part circuit configuration of a sales management device in the system;
FIG. 9 is a schematic diagram illustrating a data structure of a conversion table included in the sales management device;
FIG. 10 is a schematic diagram illustrating an example of a purchase list included in the sales management device;
FIG. 11 is a flowchart illustrating a procedure of main information processing executed by a processor of the sales management device;
FIG. 12 is a flowchart specifically illustrating a procedure of purchase processing in the information processing;
FIG. 13 is a flowchart specifically illustrating a procedure of commodity return processing in the information processing;
FIG. 14 is a flowchart specifically illustrating the procedure of the commodity return processing in the information processing;
FIG. 15 is a flowchart specifically illustrating a procedure of provisional registration cancellation processing in the information processing;
FIG. 16 is a diagram illustrating an example of a purchase confirmation image displayed on a touch panel of an accounting machine;
FIG. 17 is a diagram illustrating an example of a number of items confirmation image displayed on touch panel of the accounting machine; and
FIG. 18 is a diagram illustrating an example of a number of items correction image displayed on the touch panel of the accounting machine.

### DETAILED DESCRIPTION

An object of embodiments is to provide a sales management device that can reduce a load required for information processing of a sales management system that enables sales of commodities displayed in a store without involvement of a store clerk.

To solve the aforementioned problems, there is provided a sales management device comprising a processing circuitry having programmed instructions to: receive first data from a first sensor indicating movement of a commodity displayed in a display place; receive second data from a second sensor identifying at least one customer located proximate the display place when the commodity is moved, the at least one customer including a first customer; provisionally register, in response to a determination that a plurality of customers are identified in the second data, sales data of the commodity in purchase lists of the respective customers; prevent accounting for the first customer in response to a determination that a purchase list of the first customer includes provisionally registered sales data; finalize, in response to a determination that only one customer is identified in the second data, registration of the sales data of the commodity in the purchase list of the first customer; and permit accounting for the first customer in response to a determination that the purchase list of the first customer does not include provisionally registered sales data.

In the preferred embodiment, the processing circuitry has programmed instructions to provide an inquiry to the first customer asking whether the first customer intends to purchase the commodity in response to the determination that the purchase list of the first customer includes provisionally registered sales data.

In the preferred embodiment, the processing circuitry has programmed instructions to delete the sales data of the commodity from the purchase list of the first customer in response to receiving a response to the inquiry indicating that the first customer does not intend to purchase the commodity.

In the preferred embodiment, the processing circuitry has programmed instructions to change sales data of the commodity in a purchase list of a second customer to final registration in response to both (a) receiving the response to the inquiry indicating that the first customer does not intend to purchase the commodity and (b) a determination that sales data of the commodity is not present in purchase lists of any other customers.

In the preferred embodiment, the processing circuitry has programmed instructions to change sales data of the commodity in a purchase list of a second customer to final registration in response to both (a) receiving a response to the inquiry indicating that the first customer does not intend to purchase the commodity and (b) a determination that the at least one customer identified in the second data includes only the first customer and the second customer.

In the preferred embodiment, the processing circuitry has programmed instructions to: provide an inquiry to the first customer asking whether the first customer intends to purchase the commodity in response to the determination that the purchase list of the first customer includes provisionally registered sales data; and change the sales data in the purchase list of the first customer to final registration and delete sales data provisionally registered in a purchase list of a second customer in response to receiving a response to the inquiry indicating that the first customer intends to purchase the commodity.

In the preferred embodiment, the sales data in the purchase list of the first customer includes a number of pieces of the commodity; and the processing circuitry has programmed instructions to: provide an inquiry to the first customer regarding a number of pieces of the commodity that the first customer intends to purchase; and correct the number of pieces of the commodity in the sales data in the purchase list of the first customer and change the sales data in the purchase list of the first customer to final registration without deleting sales data provisionally registered in a purchase list of a second customer in response to a determination that the number of pieces of the commodity in the sales data in the purchase list of the first customer is not equal to the number of pieces of the commodity that the first customer intends to purchase.

In the preferred embodiment, the sales data in the purchase list of the first customer includes a number of pieces of the commodity; and the processing circuitry has programmed instructions to: provide an inquiry to the first customer regarding a number of pieces of the commodity that the first customer intends to purchase; and change the sales data in the purchase list of the first customer to final registration and delete sales data provisionally registered in a purchase list of a second customer in response to a determination that the number of pieces of the commodity in the sales data in the purchase list of the first customer is equal to the number of pieces of the commodity that the first customer intends to purchase.

In the preferred embodiment, the processing circuitry has programmed instructions to: receive third data indicating that a second commodity has been returned to a second display place; receive fourth data identifying at least one customer located near the second display place when the second commodity is returned, wherein the at least one customer located near the second display place includes a second customer; and delete finally registered sales data of the second commodity from a purchase list of the second customer in response to a determination that only one customer is identified in the fourth data.

In the preferred embodiment, the processing circuitry has programmed instructions to: receive third data indicating that a second commodity has been returned to a second display place; receive fourth data identifying at least one customer located near the second display place when the second commodity is returned, wherein the at least one customer located near the second display place includes a second customer; and delete provisionally registered sales data of the second commodity from a purchase list of the second customer and from a purchase list of a third customer in response to a determination that only one customer is identified in the fourth data.

In the preferred embodiment, the processing circuitry has programmed instructions to: receive third data indicating that a second commodity has been returned to a second display place; receive fourth data identifying at least one customer located near the second display place when the second commodity is returned; and in response to a determination that both (a) the fourth data identifies a second customer and a third customer and (b) purchase lists of each of the second customer and the third customer include sales data of the second commodity, change the sales data of the second commodity in the purchase list of the second customer from final registration to provisional registration and retain the sales data of the second commodity in the purchase list of the third customer as provisionally registered.

There is also provided a sales management method comprising: detecting, by a first sensor, movement of a commodity displayed in a display place; identifying, by a second sensor, at least one customer located near the display place where the movement of the commodity is detected, the at least one customer including a first customer; finalizing, in response to only one customer being identified, registration of sales data of the commodity in a purchase list of the first customer; provisionally registering, in response to a plurality of customers being identified, the sales data of the commodity in purchase lists of the respective customers; permitting accounting for the first customer in response to determining that the purchase list of the first customer does not include provisionally registered sales data; and preventing accounting for the first customer in response to determining that the purchase list of the first customer includes provisionally registered sales data.

The sales management method further comprises: providing, by a display, an inquiry to the first customer asking whether the first customer intends to purchase the commodity in response to the determination that the purchase list of the first customer includes provisionally registered sales data; and deleting the sales data of the commodity from the purchase list of the first customer in response to receiving a response to the inquiry indicating that the first customer does not intend to purchase the commodity.

The sales management method further comprises: providing, by a display, an inquiry to the first customer asking whether the first customer intends to purchase the commodity in response to the determination that the purchase list of the first customer includes provisionally registered sales data; and changing the sales data in the purchase list of the first customer to final registration and deleting sales data provisionally registered in a purchase list of a second customer in response to receiving a response to the inquiry indicating that the first customer intends to purchase the commodity.

There is also provided a sales management system comprising: a first sensor configured to detect removal of a commodity from a display place; a second sensor configured to identify at least one customer located near the display place where the removal of the commodity is detected by the first sensor, the at least one customer including a first customer; and at least one processor configured to communicate with both the first sensor and the second sensor and programmed to: finalize, in response to a determination that only one customer is identified by the second sensor, registration of sales data of the commodity in a purchase list of the first customer; provisionally register, in response to a determination that a plurality of customers are identified by the second sensor, sales data of the commodity in purchase lists of the respective customers; permit accounting for the first customer in response to a determination that the purchase list of the first customer does not include provisionally registered sales data; and prevent accounting for the first customer in response to a determination that a purchase list of the first customer includes provisionally registered sales data.

According to at least one embodiment, a sales management device includes a movement detecting unit, a purchase-customer specifying unit, a final registration unit, a provisional registration unit, and a control unit. The movement detecting unit detects movement of a commodity displayed in a display place. The purchase-customer specifying unit specifies a customer located near the display place where the movement of the commodity is detected by the movement detecting unit. The final registration unit finalizes, if one customer is specified by the purchase-customer specifying unit, registration of sales data of the commodity in a purchase list of the customer. The provisional registration unit provisionally registers, if a plurality of customers are specified by the purchase-customer specifying unit, sales data of the commodity in purchase lists of the respective customers. The control unit permits accounting for a customer whose provisionally registered sales data is not included in the sales data registered in the purchase list and does not permit accounting for a customer whose provisionally registered sales data is included in the sales data registered in the purchase list.

A sales management device according to an embodiment is explained below with reference to the drawings. In this embodiment, the sales management device is incorporated in a sales management system that enables sales of commodities displayed in a store without involvement of a store clerk. Therefore, first, the sales management system is explained.

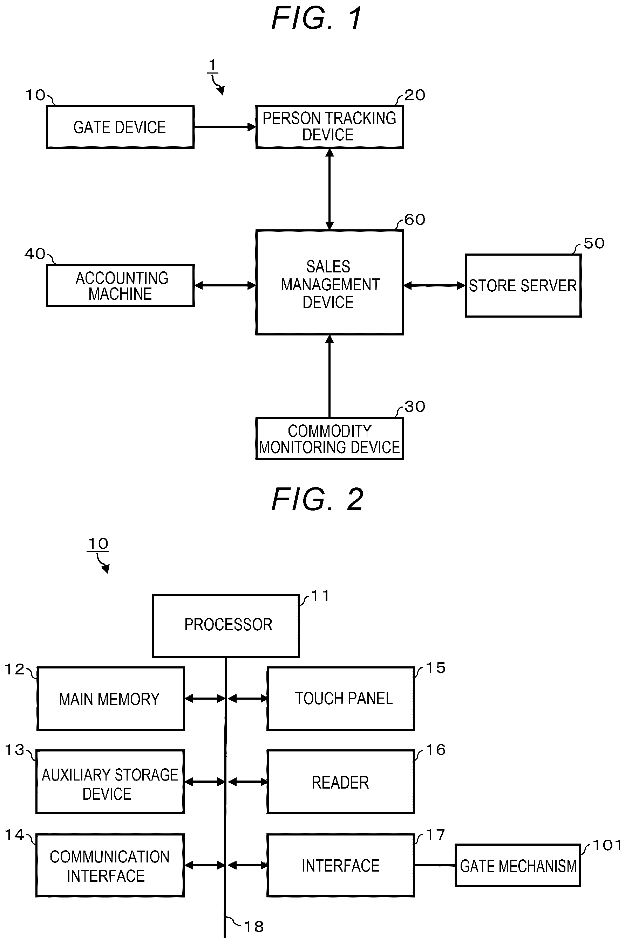

FIG. 1 is a block diagram illustrating a schematic configuration of a sales management system 1. The sales management system 1 includes a gate device 10, a person tracking device 20, a commodity monitoring device 30, an accounting machine 40, a store server 50, and a sales management device 60. The gate device 10 is connected to the person tracking device 20 by communication means. The person tracking device 20, the commodity monitoring device 30, the accounting machine 40, and the store server 50 are respectively connected to the sales management device 60 by the communication means. The gate device 10 may be further connected to at least one of the store server 50 and the sales management device 60 by the communication means. The communication means is, for example, a Local Area Network (LAN). The LAN may be a wired LAN or may be a wireless LAN.

The gate device 10, the person tracking device 20, the commodity monitoring device 30, the accounting machine 40, and the store server 50 are explained in order. The gate device 10 receives check-in operation for a customer, who is a store visitor, to enter a store. The gate device 10 selectively forms an opened state for permitting store entry of the customer and a closed state for preventing the store entry of the customer.

FIG. 2 is a block diagram illustrating a main part circuit configuration of the gate device 10. The gate device 10 includes a processor 11, a main memory 12, an auxiliary storage device 13, a communication interface 14, a touch panel 15, a reader 16, an interface 17, a system transmission line 18, and a gate mechanism 101. The gate mechanism 101 is connected to the interface 17. The processor 11, the main memory 12, the auxiliary storage device 13, the communication interface 14, the touch panel 15, the reader 16, and the interface 17 are respectively connected to the system transmission line 18. The system transmission line 18 includes an address bus, a data bus, and a control signal line. In the gate device 10, the processor 11, the main memory 12, and the auxiliary storage device 13 are connected by the system transmission line 18 to configure a computer that performs information processing for controlling the gate device 10.

The processor 11 is equivalent to a central part of the computer. The processor 11 controls the units in order to realize various functions of the gate device 10 according to an operating system or application programs. The processor 11 is, for example, a Central Processing Unit (CPU).

The main memory 12 is equivalent to a main storage part of the computer. The main memory 12 includes a nonvolatile memory region and a volatile memory region. The main memory 12 stores the operating system or the application programs in the nonvolatile memory region. The main memory 12 stores, in the volatile memory region, data necessary for the processor 11 in executing processing for controlling the units. The main memory 12 uses the volatile memory region as a work area where data is rewritten as appropriate by the processor 11. The nonvolatile memory region is, for example, a Read Only Memory (ROM). The volatile memory region is, for example, a Random Access Memory (RAM).

The auxiliary storage device 13 is equivalent to an auxiliary storage part of the computer. As the auxiliary storage device 13, for example, a well-known storage device such as an electric erasable programmable read-only memory (EEPROM), a hard disc drive (HDD), or a solid state drive (SSD) is used alone or a plurality of storage devices are used in combination. The auxiliary storage device 13 saves data used by the processor 11 in performing various kinds of processing and data generated by the processing in the processor 11. The auxiliary storage device 13 sometimes stores the application programs.

The communication interface 14 is a circuit for performing data communication with other devices connected via a network, which is communication means.

The touch panel 15 displays a screen for presenting various kinds of information to an operator. The touch panel 15 inputs data designated by touch operation on a screen by the operator. An operator of the gate device 10 is often a customer. However, a store clerk is sometimes the operator.

The reader 16 reads a customer ID presented by a check-in customer. The customer ID is a unique identification code allocated to a customer who uses the store. The customer ID is displayed, for example, in a form of a barcode on a display of a smartphone carried by the customer. In this case, the reader 16 is a barcode reader. The customer ID may be saved in, for example, an IC chip of a card medium carried by the customer. In this case, the reader 16 is a card reader.

The interface 17 outputs an opening command signal or a closing command signal to the gate mechanism 101 (e.g., a gate actuator, a gate assembly, a gate actuator assembly, etc.). The gate mechanism 101 includes a door for opening and closing a gate and a sensor that detects passage of a person through the gate, that is, a gate passage sensor. The gate passage sensor is, for example, an optical sensor. The gate mechanism 101 opens the door according to the opening command signal to thereby open the gate. The gate mechanism 101 closes the door according to the closing command signal to thereby close the gate. The gate mechanism 101 outputs a detection signal of the gate passage sensor to the interface 17. The interface 17 receives the detection signal input from the gate passage sensor and outputs the detection signal to the processor 11.

In the gate device 10 having such a configuration, if a customer ID is read by the reader 16, the processor 11 inquires about validity of the customer ID via the communication interface 14. An inquiry destination is, for example, the store server 50. If the validity of the customer ID is admitted, the processor 11 opens the gate of the gate mechanism 101 and notifies the customer ID to the person tracking device 20 via the communication interface 14. If the validity of the customer ID is not admitted, the processor 11 causes the touch panel 15 to display an image for notifying store entry rejection to the customer. The processor 11 closes the gate of the gate mechanism 101 and prevents store entry of the customer.

In FIG. 1, only one gate device 10 is illustrated. However, the number of gate devices 10 is not particularly limited. The sales management system 1 may include a plurality of gate devices 10.

The person tracking device 20 is a device for tracking actions of a customer, who is a person entering the store through the gate of the gate device 10, until the customer leaves the store. The person tracking device 20 analyzes images photographed by a large number of cameras attached to the ceiling and the like of the store to track actions of the customer.

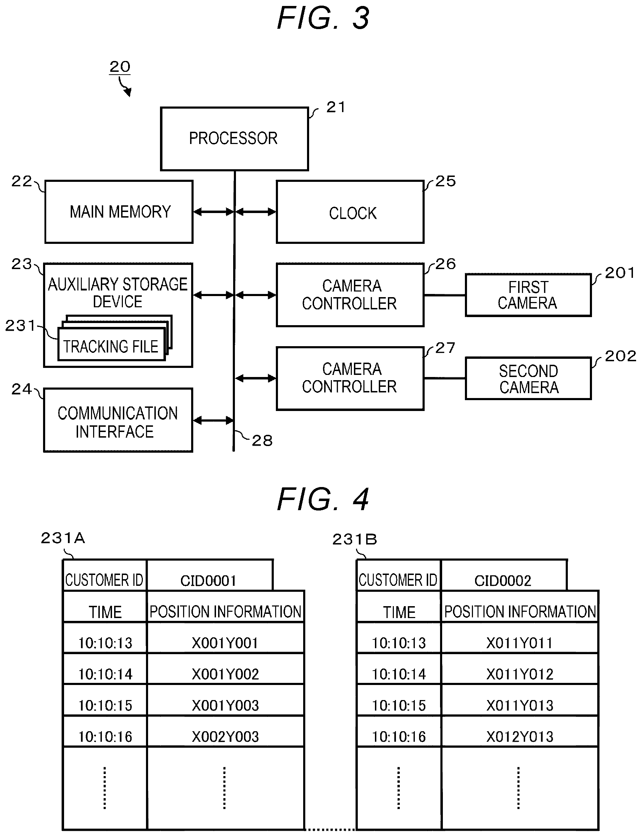

FIG. 3 is a block diagram illustrating a main part circuit configuration of the person tracking device 20. The person tracking device 20 includes a processor 21, a main memory 22, an auxiliary storage device 23, a communication interface 24, a clock 25, a first camera controller 26, a second camera controller 27, a system transmission line 28, a first camera 201 (e.g., a sensor), and a second camera 202 (e.g., a sensor). The first camera 201 is connected to the first camera controller 26. The second camera 202 is connected to the second camera controller 27. The processor 21, the main memory 22, the auxiliary storage device 23, the communication interface 24, the clock 25, the first camera controller 26, and the second camera controller 27 are respectively connected to the system transmission line 28. The system transmission line 28 includes an address bus, a data bus, and a control signal line. In the person tracking device 20, the processor 21, the main memory 22, and the auxiliary storage device 23 are connected by the system transmission line 28 to configure a computer that performs information processing for controlling the person tracking device 20.

Explanation about the processor 21, the main memory 22, the auxiliary storage device 23, and the communication interface 24 overlaps the explanation about the processor 11, the main memory 12, the auxiliary storage device 13, and the communication interface 14 of the gate device 10. Accordingly, further explanation is omitted.

The clock 25 functions as a time information source of the person tracking device 20. The processor 21 acquires, as present time, time clocked (e.g., measured) by the clock 25.

The first camera controller 26 controls the first camera 201. The first camera controller 26 captures an image photographed by the first camera 201. The first camera 201 is a digital video camera for photographing the vicinity of the gate of the gate device 10. The first camera 201 functions as a customer specifying camera for capturing and specifying a customer passing through the gate. A single digital video camera may be disposed near the gate as the first camera 201. Two or more digital video cameras may be disposed near the gate as the first camera 201.

The second camera controller 27 controls the second camera 202. The second camera controller 27 captures an image photographed by the second camera 202. The second camera 202 is a digital video camera for photographing the entire region of the store. The second camera 202 functions as a customer tracking camera for tracking a customer moving in the store. A large number of digital video cameras are disposed on the ceiling and the like of the store as the second camera 202.

In the person tracking device 20 having such a configuration, if receiving a customer ID from the gate terminal 10, the processor 21 creates a tracking file 231 in which the customer ID is set and saves the tracking file 231 in the auxiliary storage device 23. The processor 21 captures, from the image photographed by the first camera 201, a person passing through the gate of the gate device 10 and specifies the person as a customer having the customer ID. The processor 21 tracks the customer having the customer ID from the image photographed by the second camera 202. The processor 21 acquires position information of the customer, for example, at every one second and describes the time and the position information in the tracking file 231 with the customer ID in time series. The position information is specified as an X-Y coordinate calculated by setting, for example, any point on a floor surface as an origin O of an X-Y plane and dividing distances in an X direction and a Y direction from the origin O to a point of the customer by predetermined resolution.

FIG. 4 is a schematic diagram illustrating a data structure of the tracking file 231. As illustrated in FIG. 4, a customer ID and pair data of time and position information are described in the tracking file 231. The pair data is described in time series. The pair data is a track of actions in the store of a customer specified by the customer ID, that is, moving line data. That is, in FIG. 4, a tracking file 231A is a data file describing moving line data of a customer having a customer ID "CID0001". A tracking file 231B is a data file describing moving line data of a customer having a customer ID "CID0002".

The commodity monitoring device 30 is a device for monitoring movement of commodities displayed in display places such as commodity shelves, commodity cases or sales spaces. Specifically, the commodity monitoring device 30 monitors, with sensors, whether a commodity is moving in a direction away from a display place or moving in a direction in which the commodity is placed in the display place. The sensors are, for example, an optical sensor and a weight sensor. That is, if the movement of the commodity is detected by the optical sensor and a decrease in a total weight of commodities displayed in the display place is detected by the weight sensor, the commodity monitoring device 30 recognizes that the commodity moves in the direction away from the display place. Similarly, if the movement of the commodity is detected by the optical sensor and an increase in the total weight of the commodities displayed in the display place is detected by the weight sensor, the commodity monitoring device 30 recognizes that the commodity moves in the direction in which the commodity is placed in the display place.

The commodity monitoring device 30 has a function of identifying a moved commodity. Specifically, cameras are provided in the display places of the commodities. The commodity monitoring device 30 identifies a commodity from characteristics of images photographed by the cameras. A technique for identifying a commodity from photographed images of commodities is well known. Therefore, explanation of the technique is omitted.

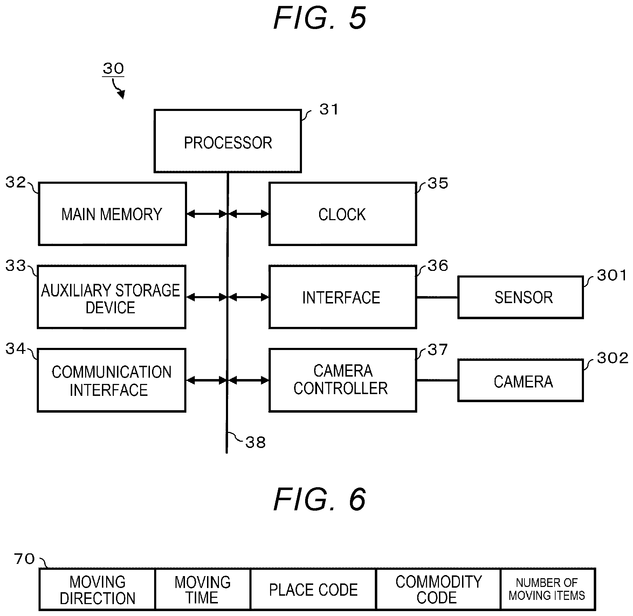

FIG. 5 is a block diagram illustrating a main part circuit configuration of the commodity monitoring device 30. The commodity monitoring device 30 includes a processor 31, a main memory 32, an auxiliary storage device 33, a communication interface 34, a clock 35, an interface 36, a camera controller 37, a system transmission line 38, a sensor 301, and a camera 302. The sensor 301 is connected to the interface 36. The camera 302 is connected to the camera controller 37. The processor 31, the main memory 32, the auxiliary storage device 33, the communication interface 34, the clock 35, the interface 36, and the camera controller 37 are respectively connected to the system transmission line 38. The system transmission line 38 includes an address bus, a data bus, and a control signal line. In the commodity monitoring device 30, the processor 31, the main memory 32, and the auxiliary storage device 33 are connected by the system transmission line 38 to configure a computer that performs information processing for controlling the commodity monitoring device 30.

Explanation about the processor 31, the main memory 32, the auxiliary storage device 33, the communication interface 34, and the clock 35 overlaps the explanation about the processor 21, the main memory 22, the auxiliary storage device 23, the communication interface 24, and the clock 25 of the person tracking device 20. Accordingly, further explanation is omitted.

The interface 36 receives a signal input from the sensor 301. The sensor 301 is provided in a display place of commodities in order to detect movement of the commodities. The sensor 301 is the optical sensor, the weight sensor, and the like.

The camera controller 37 controls the camera 302. The camera controller 37 captures an image photographed by the camera 302. The camera 302 is provided in a display place of commodities in order to identify the commodities, movement of which are recognized. The camera 302 is, for example, a Charge Coupled Device (CCD) camera.

In the commodity monitoring device 30 having such a configuration, the processor 31 monitors movement of a commodity with a signal input from the sensor 301. If detecting movement of a commodity, the processor 31 acquires a moving direction, moving time, and a place code of the commodity. The moving direction is information for specifying whether the commodity moves in a direction in which the commodity is taken out from the display place or moves in a direction in which the commodity is returned to the display place. In the following explanation, the direction in which the commodity is taken out from the display place is referred to as purchase direction. The direction in which the commodity is returned to the display place is referred to as commodity return direction. The moving time is time of the clock 35 at a point in time when the movement of the commodity is detected. The place code is a code indicating the display place of the moved commodity. A specific place code is set in advance in the display place of the commodities.

The processor 31 identifies the moved commodity from the image photographed by the camera 302. The processor 31 acquires a commodity code and the number of moved items of the moved commodity. Specifically, the commodity monitoring device 30 includes, in the auxiliary storage device 33, a database that correlates exterior feature value data and unit weight data with commodity codes of commodities and stores the exterior feature value data and unit weight data. The processor 31 collates a feature value of a commodity image photographed by the camera 302 and the exterior feature value data of the commodities and acquires a commodity code and unit weight data correlated with the exterior feature value data having the highest similarity degree. The processor 31 divides the unit weight data by a displacement amount of weight detected by the weight sensor to thereby acquire the number of pieces of the moved commodity.

If acquiring the moving direction, the moving time, the place code, the commodity code, and the number of moved pieces in this way, the processor 31 transmits a movement notification command 70 (see FIG. 6) to the sales management device 60 via the communication interface 34 (see FIG. 6).

FIG. 6 is a schematic diagram illustrating a data structure of the movement notification command 70. As illustrated in FIG. 6, the movement notification command 70 includes respective kinds of information concerning the moving direction, the moving time, the place code, the commodity code, and the number of moved pieces. That is, every time the processor 31 detects movement of a commodity based on a signal of the sensor 301 and a photographed image by the camera 302, the processor 31 creates the movement notification command 70 including respective kinds of information concerning a moving direction, moving time, a place code, a commodity code, and the number of moved pieces of the commodity and outputs the movement notification command 70 to the sales management device 60.

The accounting machine 40 is a terminal for settling a commercial transaction with a customer. The accounting machine 40 can settle the commercial transaction with a well-known settlement scheme such as cash settlement, credit card settlement, electronic money settlement, point settlement, or code settlement (also called mobile settlement or smartphone settlement).

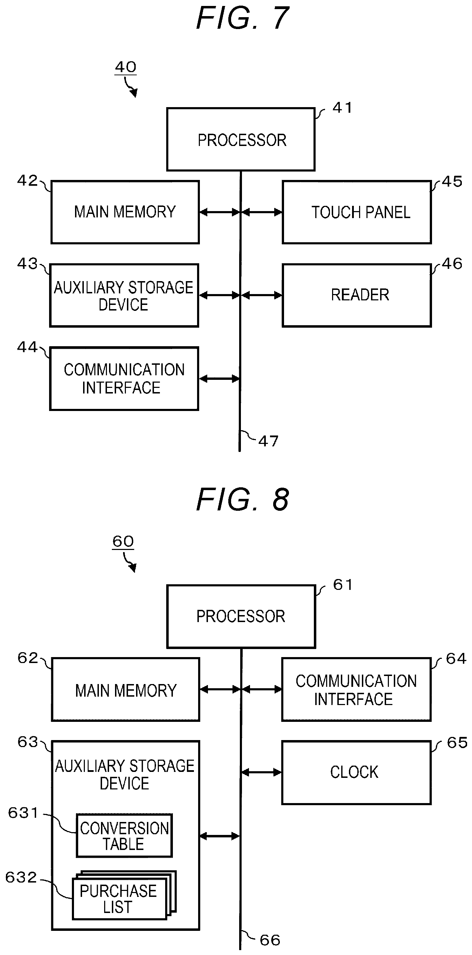

FIG. 7 is a block diagram illustrating a main part circuit configuration of the accounting machine 40. The accounting machine 40 includes a processor 41, a main memory 42, an auxiliary storage device 43, a communication interface 44, a touch panel 45, a reader 46, and a system transmission line 47. The processor 41, the main memory 42, the auxiliary storage device 43, the communication interface 44, the touch panel 45 (e.g., a display), and the reader 46 are respectively connected to the system transmission line 47. The system transmission line 47 includes an address bus, a data bus, and a control signal line. In the accounting machine 40, the processor 41, the main memory 42, and the auxiliary storage device 43 are connected by the system transmission line 47 to configure a computer that performs information processing for controlling the accounting machine 40.

Explanation about the processor 41, the main memory 42, the auxiliary storage device 43, the communication interface 44, the touch panel 45, and the reader 46 overlaps the explanation about the processor 11, the main memory 12, the auxiliary storage device 13, the communication interface 14, the touch panel 45, and the reader 46 of the gate device 10. Accordingly, further explanation is omitted.

In the accounting machine 40 having such a configuration, if a customer ID used in check-in operation is read by the reader 46, the processor 41 outputs an accounting instruction command including the customer ID to the sales management device 60. Consequently, since accounting data of a customer identified by the customer ID is transmitted from the sales management device 60, the processor 41 performs settlement of a commercial transaction based on the accounting data. The accounting data includes sales data of commodities purchased by the customer.

As the accounting machine 40 of this type, there is a manned accounting machine to which a store clerk inputs information for settlement and a self-service accounting machine to which a customer inputs information for settlement. The sales management system 1 may include both of the manned accounting machine and the self-service accounting machine or may include only one of the manned accounting machine and the self-service accounting machine. As the manned accounting machine, a POS terminal well-known in the past can be applied. As the self-service accounting machine, a self-service or semi-self-service accounting machine well-known in the past can be applied.

The store server 50 is a computer specialized for supporting an overall store job. For the support, the store server 50 manages various databases such as a commodity database and a member database.

The commodity database is an aggregate of commodity records describing data of commodities sold in the store. The commodity record includes data items such as a commodity code, a commodity name, and a price. The commodity code is a unique identification code set for each of the commodities in order to individually identify the commodities.

The member database is an aggregate of member records describing data concerning customers who perform member registration as store users, so-called members. The member record includes data items such as a customer ID, a term of validity, and a cumulative point. The term of validity is data indicating a valid period of membership. The data may be a start date and an end date of the period or may be the start date and the number of days of the period. The cumulative point is accumulated points given to a consumer, who is the member, in commercial transaction with the member.

If receiving an inquiry about validity of a customer ID from the gate device 10, the store server 50 searches through the member database. The store server 50 checks a term of validity of a member record including the inquired customer ID. If the present date and time is within the term of validity, the store server 50 returns a response of validity to the gate device 10. If the present date and time is outside the term of validity, the store server 50 returns a response of invalidity to the gate device 10. A determination condition for validity and invalidity is not limited to the term of validity. For example, the store server 50 may return the response of invalidity concerning a customer ID for which store entry prohibition is set from a store use result in the past.

Lastly, the sales management device 60 is explained. The sales management device 60 manages data relating to a purchased commodity of a customer, whose validity is approved by the check-in operation in the gate device 10 and who is tracked by the person tracking device 20. The sales management device 60 has a function of generating accounting data based on the data and outputting the accounting data to the accounting machine 40.

FIG. 8 is a block diagram illustrating a main part circuit configuration of the sales management device 60. The sales management device 60 includes a processor 61, a main memory 62, an auxiliary storage device 63, a communication interface 64, a clock 65, and a system transmission line 66. The processor 61, the main memory 62, the auxiliary storage device 63, the communication interface 64, and the clock 65 are respectively connected to the system transmission line 66. The system transmission line 66 includes an address bus, a data bus, and a control signal line. In the sales management device 60, the processor 61, the main memory 62, and the auxiliary storage device 63 are connected by the system transmission line 66 to configure a computer that performs information processing for controlling the sales management device 60.

The processor 61 is equivalent to a central part of the computer. The processor 61 controls the units in order to realize various functions of the sales management device 60 according to an operating system or application programs. The processor 61 is, for example, a CPU.

The main memory 62 is equivalent to a main storage part of the computer. The main memory 62 includes a nonvolatile memory region and a volatile memory region. The main memory 62 stores the operating system or the application programs in the nonvolatile memory region. The main memory 62 stores, in the volatile memory region, data necessary for the processor 61 in executing processing for controlling the units. The main memory 62 uses the volatile memory region as a work area where data is rewritten as appropriate by the processor 61. The nonvolatile memory region is, for example, a ROM. The volatile memory region is, for example, a RAM.

The auxiliary storage device 63 is equivalent to an auxiliary storage part of the computer. As the auxiliary storage device 63, a well-known storage device such as an EEPROM, a HDD, or an SSD is used alone or a plurality of storage devices are used in combination. The auxiliary storage device 63 saves data used by the processor 61 in performing various kinds of processing and data generated by the processing in the processor 61. The auxiliary storage device 63 sometimes stores the application programs.

The application programs stored in the auxiliary storage device 63 include a control program related to sales management. A method of installing the control program in the auxiliary storage device 63 is not particularly limited. The control program can be recorded in a removable recording medium or the control program can be distributed by communication via a network and installed in the auxiliary storage device 63. A form of the recording medium may be any form if the recording medium can store programs like a CD-ROM, a memory card, or the like and can be read by a device. The control program may be installed in the main memory 62 rather than the auxiliary storage device 63.

The communication interface 64 is a circuit for performing data communication with other devices connected via the network, which is communication means.

The clock 65 functions as a time information source of the sales management device 60. The processor 61 acquires, as present time, time clocked by the clock 25.

The sales management device 60 having such a configuration stores a conversion table 631 in the auxiliary storage device 63. The sales management device 60 uses a part of a storage region of the auxiliary storage device 63 as a region for creating a plurality of purchase lists 632.

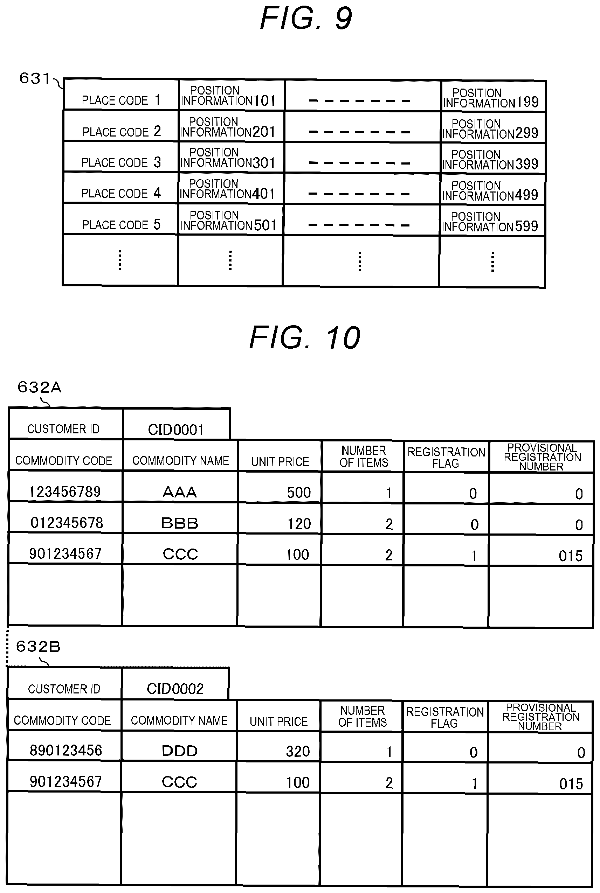

FIG. 9 is a schematic diagram illustrating a data structure of the conversion table 631. As illustrated in FIG. 9, the conversion table 631 correlates a plurality of kinds of position information with place codes and stores the plurality of kinds of position information. The place code is a unique identification code set for each of display places for commodities in order to identify the display places as explained above. The plurality of kinds of position information are sets of position information obtained by the person tracking device 20 with respect to sections of the floor surface where customers who purchase commodities displayed in the display places specified by the place codes are estimated to stand or otherwise be present. A part of a region of a section may overlap a section adjacent to the section.

FIG. 10 is a schematic diagram illustrating an example of the purchase list 632. In FIG. 10, a purchase list 632A is an example of a purchase list of the customer identified by the customer ID "CID0001". A purchase list 632B is an example of a purchase list of the customer identified by the customer ID "CID0002". As illustrated in FIG. 10, the purchase list 632 (632A, 632B) includes a region for describing a customer ID and a region for describing a plurality of purchase records. The purchase record includes data items such as a commodity code, a commodity name, a unit price, the number of items, a registration flag, and a provisional registration number. The commodity code, the commodity name, the unit price, and the number of items are sales data of a purchased commodity, so-called commodity sales data. The registration flag is one-bit data for identifying whether the purchase record is a purchase record of a final registration or a purchase record of a provisional registration. The provisional registration is registration performed when a customer who purchases a purchased commodity of the purchase record is not specified. The final registration is registration performed when the customer who purchases the purchased commodity of the purchase record is specified. In this embodiment, a registration flag of the purchase record of the final registration is "0" and a registration flag of the purchase record of the provisional registration is "1". A provisional registration number is added to the purchase record of the provisional registration. The provisional registration number is a serial number issued when the customer who purchases the purchased commodity is not specified.

Incidentally, in FIG. 10, purchase records of a commodity AAA and a commodity BBB are finally registered and a purchase record of a commodity CCC is provisionally registered in the purchase list 632A. A purchase record of a commodity DDD is finally registered and the purchase record of the commodity CCC is provisionally registered in the purchase list 632B. Provisional registration numbers of registration records of the provisional registration respectively registered in both the purchase lists 632A and 632B coincide. This means that it is not specified whether the customer identified by the customer ID "CID0001" or the customer identified by the customer ID "CID0002" purchases the commodity CCC.

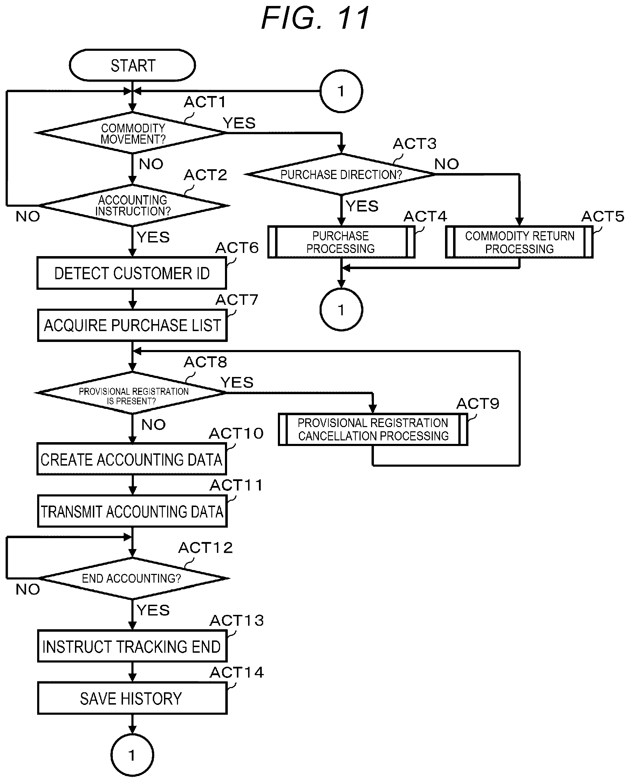

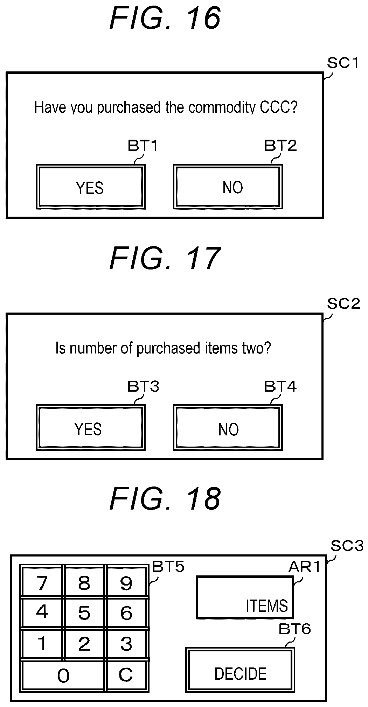

FIGS. 11 to 15 are flowcharts illustrating a procedure of main information processing executed by the processor 61 of the sales management device 60 according to the control program. FIGS. 16 to 18 are examples of images displayed on the touch panel 45 of the accounting machine 40 according to the information processing. The operation of the sales management device 60 is explained with reference to the figures. The following operation example is an example. The procedure and the like are not particularly limited if the same result is obtained.

In ACT 1 in FIG. 11, the processor 61 confirms whether the movement notification command 70 indicating that movement of a commodity is detected in the commodity monitoring device 30 is received. If the movement notification command 70 is not received, the processor 61 determines NO in ACT 1 and proceeds to ACT 2. In ACT 2, the processor 61 confirms whether an accounting instruction command indicating that a customer ID is read in the accounting machine 40 is received. If the accounting instruction command is not received, the processor 61 determines NO in ACT 2 and returns to ACT 1. In ACT 1 and ACT 2, the processor 61 waits for the movement notification command 70 to be received or the accounting instruction command to be received.

In a waiting state in ACT 1 and ACT 2, when the movement notification command 70 is received from the commodity monitoring device 30, the processor 61 determines YES in ACT 1 and proceeds to ACT 3. In ACT 3, the processor 61 confirms whether a moving direction of the movement notification command 70 indicates the purchase direction or the commodity return direction. If the moving direction indicates the purchase direction, the processor 61 determines YES in ACT 3 and proceeds to ACT 4. In ACT 4, the processor 61 executes purchase processing.

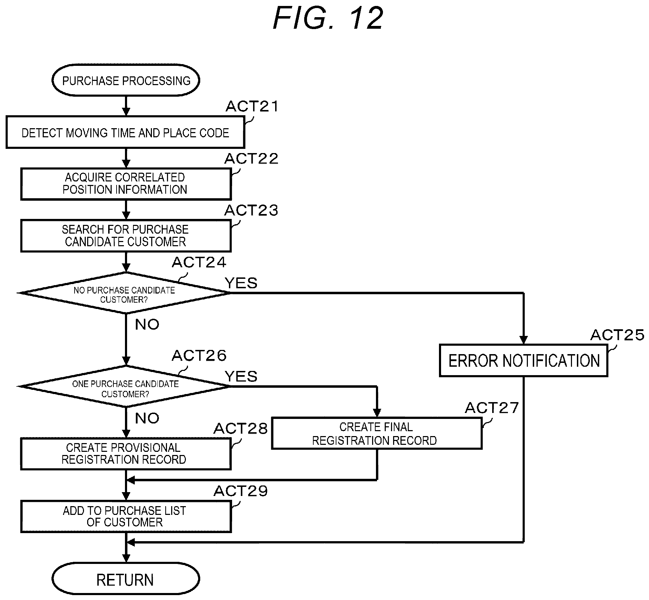

FIG. 12 is a flowchart specifically illustrating a procedure of the purchase processing. If starting the purchase processing, in ACT 21, the processor 61 detects moving time and a place code from the movement notification command 70. In ACT 22, the processor 61 acquires a position information group correlated with the place code and set in the conversion table 631. In ACT 23, the processor 61 outputs a command for searching for a purchase candidate customer, a so-called candidate customer search command to the person tracking device 20. The candidate customer search command includes the moving time detected in the processing in ACT 21 and the position information group acquired in the processing in ACT 22.

The processor 21 of the person tracking device 20, which receives the candidate customer search command, searches through the tracking file 231. The processor 21 detects all customer IDS in the tracking file 231 in which position information associated with the moving time is included in the position information group. The processor 21 outputs a response command including the detected customer ID to the sales management device 60.

The processor 61 of the sales management device 60, which outputs the candidate customer search command, waits for the response command. If receiving the response command via the communication interface 64, in ACT 24, the processor 61 confirms whether a purchase candidate customer is present. That is, the processor 61 confirms whether a customer ID is included in the response command.

If no customer ID is included in the response command, this means that an error occurs in which, although movement of a commodity in the purchase direction is detected, a customer who should be present in a display place of the commodity, that is, a purchase candidate customer cannot be specified. In this case, the processor 61 determines YES in ACT 24 and proceeds to ACT 25. In ACT 25, the processor 61 transmits an error notification to the store server 50. The store server 50, which receives the error notification, outputs content of an error to, for example, an information terminal used by the store administrator.

If a customer ID is included in the response command, the processor 61 determines NO in ACT 24 and proceeds to ACT 26. In ACT 26, the processor 61 confirms whether one purchase candidate customer or a plurality of purchase candidate customers are present. That is, the processor 61 confirms whether only one customer ID is included in the response command.

If only one customer ID is included in the response command, that is, one purchase candidate customer is present, the processor 61 determines YES in ACT 26 and proceeds to ACT 27. In ACT 27, the processor 61 creates a purchase record of final registration. That is, the processor 61 adds a registration flag "0" of the final registration to a commodity code, a commodity name, a unit price, and the number of items of a purchased commodity and creates a purchase record. The commodity code and the number of items are the commodity code and the number of items included in the movement notification command 70. The commodity name and the unit price are the commodity name and the unit price correlated with the commodity code and set in the commodity database.

On the other hand, if a plurality of customer IDs are included in the response command, that is, if a plurality of purchase candidate customers are present, the processor 61 determines NO in ACT 26 and proceeds to ACT 28. In ACT 28, the processor 61 creates a purchase record of provisional registration. That is, the processor 61 adds a registration flag " 1" of the provisional registration to the commodity code, the commodity name, the unit price, and the number of items of the purchased commodity. The processor 61 counts up a count value of a provisional registration number counter by "1". The processor 61 adds the count value of the provisional registration number counter to the purchase record of the provisional registration as a provisional registration number. The provisional registration number counter is formed in the volatile memory region of the main memory 62. An initial value of the provisional registration number counter is set to "0". The provisional registration number counter is reset to the initial value, for example, every time a business day is updated to the next day.

If finishing creating the purchase record of the final registration or the provisional registration in this way, the processor 61 proceeds to ACT 29. In ACT 29, the processor 61 adds the purchase record to the purchase list 632 with the customer ID included in the response command. Therefore, if one customer ID is included in the response command, the purchase record of the final registration is added to the purchase list 632 with the customer ID. On the other hand, if two or more customer IDs are included in the response command, the purchase record of the provisional registration is added to the purchase lists 632 of the respective customer IDs. The purchase processing ends here.

Referring back to FIG. 11, if ending the purchase processing, the processor 61 returns to ACT 1. That is, the processor 61 waits for the movement notification command 70 to be received or the accounting instruction command to be received. In this waiting state, if receiving the movement notification command 70, the moving direction of which indicates the commodity return direction, from the commodity monitoring device 30, the processor 61 determines YES in ACT 1, further determines NO in ACT 3, and proceeds to ACT 5. In ACT 5, the processor 61 executes commodity return processing.

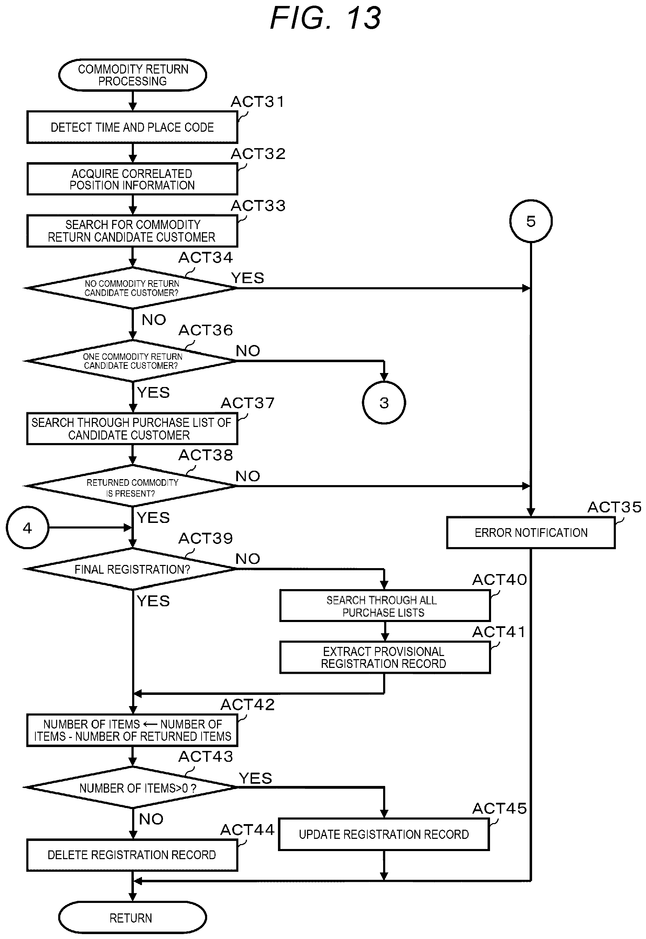

FIG. 13 is a flowchart specifically illustrating a procedure of the commodity return processing. If starting the commodity return processing, in ACT 31, the processor 61 detects moving time and a place code from the movement notification command 70. In ACT 32, the processor 61 acquires a position information group correlated with the place code and set in the conversion table 631. In ACT 33, the processor 61 outputs a command for searching for a commodity return candidate customer, a so-called candidate customer search command to the person tracking device 20. The candidate customer search command is the same as the candidate customer search command output in the processing in ACT 23 of the purchase processing. Therefore, a response command is returned from the person tracking device 20.

The processor 61 of the sales management device 60, which outputs the candidate customer search command, waits for the response command. If receiving the response command via the communication interface 64, in ACT 34, the processor 61 confirms whether a commodity return candidate customer is present. That is, the processor 61 confirms whether a customer ID is included in the response command.

If no customer ID is included in the response command, this means that an error occurs in which, although movement of a commodity in the commodity return direction is detected, a customer who should be present in a display place of the commodity, that is, a commodity return candidate customer cannot be specified. In this case, the processor 61 determines YES in ACT 34 and proceeds to ACT 35. In ACT 35, the processor 61 transmits an error notification to the store server 50. The store server 50, which receives the error notification, outputs content of an error to, for example, the information terminal used by the store administrator.

If a customer ID is included in the response command, the processor 61 determines NO in ACT 34 and proceeds to ACT 36. In ACT 36, the processor 61 confirms whether one commodity return candidate customer or a plurality of commodity return candidate customers are present. That is, the processor 61 confirms whether only one customer ID is included in the response command.

If only one customer ID is included in the response command, that is, one commodity return candidate customer is present, the processor 61 determines YES in ACT 36 and proceeds to ACT 37. In ACT 37, the processor 61 searches through a purchase list of the commodity return candidate customer, that is, the purchase list 632 in which one customer ID included in the response command is set. The processor 61 confirms whether a registration record in which the commodity code included in the movement notification command 70 is set is saved in the purchase list 632. In the following explanation, the registration record in which the commodity code included in the movement notification command 70 is set is referred to as the relevant registration record. If the relevant registration record is not registered in the search target purchase list 632, this is an error in which a commodity, which is not a purchase commodity, is recognized as a return commodity. The processor 61 determines NO in ACT 38 and proceeds to the error notification processing in ACT 35 explained above.

Usually, the relevant registration record is registered in the search target purchase list 632. In that case, the processor 61 determines YES in ACT 38 and proceeds to ACT 39. In ACT 39, the processor 61 determines whether the relevant registration record is a registration record of final registration.

If the registration flag is "0", that is, the relevant registration record is the registration record of the final registration, the processor 61 determines YES in ACT 39 and proceeds to ACT 42. In ACT 42, the processor 61 subtracts the number of returned items from the number of items of the relevant registration record. The number of returned items is the number of items included in the movement notification command 70.

In ACT 43, the processor 61 confirms whether the number of items after the subtraction of the number of returned items is larger than "0". If the number of items after the subtraction of the number of returned items is equal to or smaller than "0", the processor 61 determines NO in ACT 43 and proceeds to ACT 44. In ACT 44, the processor 61 deletes the relevant registration record from the purchase list 632.

If the number of items after the subtraction of the number of returned items is larger than "0", the processor 61 determines YES in ACT 43 and proceeds to ACT 45. In ACT 45, the processor 61 updates the number of items of the relevant registration record saved in the purchase list 632 to the number of items after the subtraction of the number of returned items.

On the other hand, if the registration flag of the relevant registration record is "1", that is, the relevant registration record is a registration record of provisional registration, the processor 61 determines NO in ACT 39 and proceeds to ACT 40. In ACT 40, the processor 61 searches through the purchase list 632. In ACT 41, the processor 61 extracts the relevant registration record from the purchase list 632.

Thereafter, the processor 61 proceeds to ACT 42. That is, the processor 61 subtracts the number of returned items from the number of items of the extracted relevant registration record. As a result, if the number of items after the subtraction of the number of returned items is equal to or smaller than "0", the processor 61 deletes the relevant registration record from the purchase list 632. If the number of items after the subtraction of the number of returned items is larger than "0", the processor 61 updates the number of items of the relevant registration record of the purchase list 632 to the number of items after the subtraction of the number of returned items. The processor 61 ends the commodity return processing performed if one commodity return candidate customer is present.

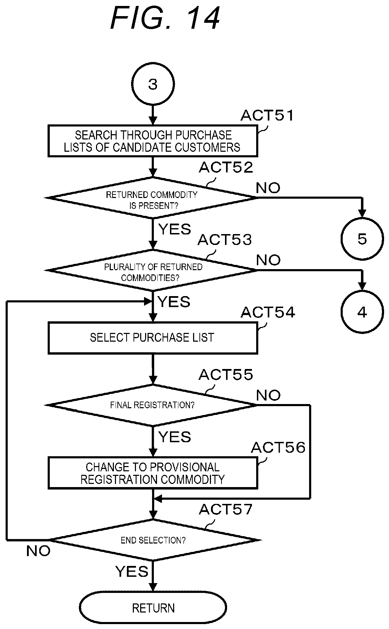

On the other hand, if a plurality of commodity return candidate customers are present, the processor 61 determines NO in ACT 36 and proceeds to ACT 51 in FIG. 14. In ACT 51, the processor 61 searches through purchase lists of the commodity return candidate customers, that is, a plurality of purchase lists 632 in which the commodity IDs included in the response command are respectively set. In ACT 52, the processor 61 confirms whether at least one relevant record is saved in the purchase lists 632. If no relevant registration record is saved in the purchase lists 632 of the commodity return candidate customers, this means an error in which a commodity, which is not a purchase commodity, is recognized as a return commodity. The processor 61 determines NO in ACT 52 and proceeds to the error notification processing in ACT 35 explained above.

Usually, the relevant registration record is registered in at least one list among the search target purchase lists 632. In that case, the processor 61 determines YES in ACT 52 and proceeds to ACT 53. In ACT 53, the processor 61 confirms whether there are a plurality of purchase lists 632 in which the relevant registration record is registered.

If there is one purchase list 632 in which the relevant registration record is registered, the processor 61 determines NO in ACT 53 and proceeds to ACT 39 in FIG. 13. The processor 61 executes the processing in ACT 39 and subsequent acts in the same manner as explained above.

If there are a plurality of purchase lists 632 in which the relevant registration record is registered, the processor 61 determines YES in ACT 53 and proceeds to ACT 54. In ACT 54, the processor 61 selects any one of the plurality of purchase lists 632. In the following explanation, the selected purchase list 632 is referred to as selected purchase list 632S. In ACT 55, the processor 61 determines whether the relevant registration record registered in the selected purchase list 632S is a registration record of final registration. If the relevant registration record is the registration record of the final registration, the processor 61 determines YES in ACT 55 and proceeds to ACT 56. In ACT 56, the processor 61 changes the registration record to a registration record of provisional registration. Specifically, the processor 61 changes a registration flag of the registration record from "0" to "1". The processor 61 counts up the provisional registration number counter by "1". The processor 61 adds a count value of the provisional registration number counter to the registration record as a provisional registration number.

If the relevant registration record is provisional registration, the processor 61 skips the processing in ACT 56. If ending the processing in ACT 56 or skipping the processing in ACT 56, in ACT 57, the processor 61 confirms whether all the purchase lists 632 in which the relevant registration record is registered are selected.

If an unselected purchase list 632 is present, the processor 61 determines NO in ACT 57 and returns to ACT 54. The processor 61 executes the processing in ACT 54 and subsequent acts again. However, at this time, in the processing in ACT 56, the processor 61 does not count up the provisional registration number counter. Therefore, the provisional registration numbers of the registration record changed from the final registration to the provisional registration coincide.

If finishing executing the processing in ACT 55 and ACT 56 on all the purchase lists 632 in this way, the processor 61 ends the commodity return processing performed when the plurality of commodity return candidate customers are present.

Referring back to FIG. 11, if receiving the accounting instruction command from the accounting machine 40 in the waiting state in ACT 1 and ACT 2, the processor 61 determines YES in ACT 2 and proceeds to ACT 6. In ACT 6, the processor 61 detects a customer ID from the accounting instruction command. In ACT 7, the processor 61 acquires the purchase list 632 in which the customer ID is set. In the following explanation, the purchase list 632 in which the customer ID of the accounting instruction command is set is referred to as accounting purchase list 632T.

In ACT 8, the processor 61 confirms whether a registration record of provisional registration is registered in the accounting purchase list 632T. If a registration record of provisional registration is not registered, that is, all registration records are final registration, the processor 61 determines NO in ACT 8 and proceeds to ACT 10. In ACT 10, the processor 61 creates accounting data based on data of the accounting purchase list 632T. The accounting data includes commodity sales data of a registration record registered in the accounting purchase list 632T.

If finishing creating the accounting data, in ACT 11, the processor 61 controls the communication interface 64 to transmit the accounting data to the accounting machine 40. The accounting data is transmitted from the communication interface 64 to the accounting machine 40 at an accounting instruction command transmission source according to this control.

The accounting machine 40, which receives the accounting data, executes settlement processing based on the accounting data. If the settlement processing ends, an accounting end command is transmitted from the accounting machine 40 to the sales management device 60.

In ACT 12, the processor 61 of the sales management device 60, which transmits the accounting data, waits for the accounting end command. If receiving the accounting end command via the communication interface 64, the processor 61 determines YES in ACT 12 and proceeds to ACT 13. In ACT 13, the processor 61 controls the communication interface 64 to transmit a tracking end command to the person tracking device 20. The tracking end command is transmitted from the communication interface 64 to the person tracking device 20 according to this control. The tracking end command includes a customer ID detected from the accounting instruction command. The processor 21 of the person tracking device 20, which receives the tracking end command, ends tracking of a customer identified by the customer ID included in the tracking end command.

In ACT 14, the processor 61 of the sales management device 60, which transmits the tracking end command, performs history saving. That is, the processor 61 outputs the accounting purchase list 632T to the store server 50. Consequently, the accounting purchase list 632T is saved in the storage device of the store server 50. Thereafter, the processor 61 returns to the waiting state in ACT 1 and ACT 2.

On the other hand, if a registration record of provisional registration is present in the accounting purchase list 632T, the processor 61 determines YES in ACT 8 and proceeds to ACT 9. In ACT 9, the processor 61 executes provisional registration cancellation processing.

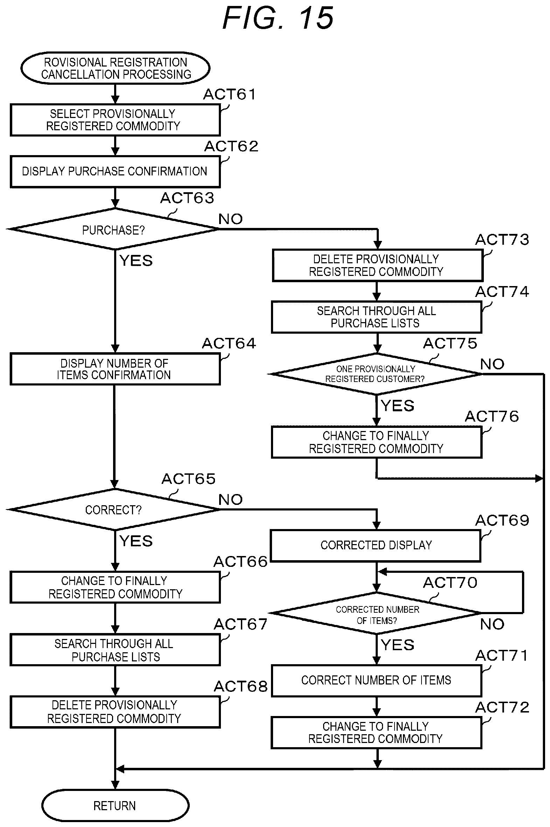

FIG. 15 is a flowchart specifically illustrating a procedure of the provisional registration cancellation processing. In ACT 61, the processor 61 selects a registration record of provisional registration from the accounting purchase list 632T. If a plurality of registration records of provisional registration are present in the accounting purchase list 632T, the processor 61 selects any one registration record. In the following explanation, the selected registration record of the provisional registration is referred to as selected provisional registration record.

In ACT 62, the processor 61 controls the communication interface 64 to transmit a purchase confirmation display command to the accounting machine 40. The purchase confirmation display command is transmitted from the communication interface 64 to the accounting machine 40 at the accounting instruction command transmission source according to this control. The purchase confirmation display command includes a commodity name of the selected provisional registration record. In the accounting machine 40 that receives the purchase confirmation display command, a purchase confirmation image SC1 (see FIG. 16) is displayed on the touch panel 45.

FIG. 16 is a display example of the purchase confirmation image SC1. As illustrated in FIG. 16, a message for inquiring the customer whether the customer purchases a commodity having the commodity name included in the purchase confirmation display command and a "YES" button BT1 and a "NO" button BT2 are displayed on the purchase confirmation image SC 1. The customer confirming the purchase confirmation image SC 1 determines whether the customer purchases the commodity having the commodity name. If the customer purchases the commodity, the customer touches the "YES" button BT1. If the customer does not purchase the commodity, the customer touches the "NO" button BT2. If the "YES" button BT1 is touched, a purchase command is transmitted from the accounting machine 40 to the sales management device 60. If the "YES" button BT2 is touched, a nonpurchase command is transmitted from the accounting machine 40 to the sales management device 60.

In ACT 63, the processor 61 of the sales management device 60, which transmits the purchase confirmation display command, waits for a command transmitted from the accounting machine 40. If receiving a purchase command via the communication interface 64, the processor 61 determines YES in ACT 63 and proceeds to ACT 64. In ACT 64, the processor 61 controls the communication interface 64 to transmit a number of items confirmation display command to the accounting machine 40. The number of items confirmation display command is transmitted from the communication interface 64 to the accounting machine 40 at a purchase command transmission source according to this control. The number of items confirmation display command includes the number of items of the selected provisional registration record. In the accounting machine 40 that receives the number of items confirmation display command, a number of items confirmation image SC2 (see FIG. 17) is displayed on the touch panel 45.

FIG. 17 is a display example of the number of items confirmation image SC2. As illustrated in FIG. 17, a message for inquiring the customer whether the number of items included in the number of items confirmation display command is correct and a "YES" button BT3 and a "NO" button BT4 are displayed on the number of items confirmation image SC2. The customer confirming the number of items confirmation image SC2 determines whether the number of items is correct as the number of purchased items. If the customer determines that the number of items is correct, the customer touches the "YES" button BT3. If the customer determines that the number of items is wrong, the customer touches the "NO" button BT4. If the "YES" button BT3 is touched, a correctness command is transmitted from the accounting machine 40 to the sales management device 60. If the "NO" button BT4 is touched, an incorrectness command is transmitted from the accounting machine 40 to the sales management device 60.

In ACT 65, the processor 61 of the sales management device 60, which transmits the number of items confirmation display command, waits for a command transmitted from the accounting machine 40. If receiving the correctness command via the communication interface 64, the processor 61 determines YES in ACT 65 and proceeds to ACT 66. In ACT 66, the processor 61 changes the selected provisional registration record to a registration record of final registration. That is, the processor 61 changes a registration flag of the selected provisional registration record from "1" to "0". The processor 61 clears a provisional registration number of the selected provisional registration record.

In ACT 67, the processor 61 searches through all the other purchase lists 632. In ACT 68, every time the processor 61 detects a registration record including the provisional registration number of the selected provisional registration record from the other purchase lists 632, the processor 61 deletes the registration record from the purchase lists 632.

On the other hand, if receiving the incorrectness command via the communication interface 64, the processor 61 determines NO in ACT 65 and proceeds to ACT 69. In ACT 69, the processor 61 controls the communication interface 64 to transmit a corrected display command to the accounting machine 40. The corrected display command is transmitted from the communication interface 64 to the accounting machine 40 at an incorrectness command transmission source. In the accounting machine 40 that receives the corrected display command, a number of items correction image SC3 (see FIG. 18) is displayed on the touch panel 45.

FIG. 18 is a display example of the number of items correction image SC3. As illustrated in FIG. 18, a tenkey button BT5, a decision button BT6, and a number of items display field AR1 are displayed on the number of items correction image SC3. The customer confirming the number of items correction image SC3 touches the tenkey button BT5 and inputs a correct number of purchased items. The input number of purchased items is displayed in the number of items display field AR1. Accordingly, if the correct number of purchased items is displayed in the number of items display field AR1, the customer touches the decision button BT6. If the decision button BT6 is touched, a corrected number of items command is transmitted from the accounting machine 40 to the sales management device 60. The corrected number of items command includes data of the number of items displayed in the number of items display field AR1.

In ACT 70, the processor 61 of the sales management device 60, which transmits the corrected display command, waits for a command transmitted from the accounting machine 40. If receiving the corrected number of items command via the communication interface 64, the processor 61 determines YES in ACT 70 and proceeds to ACT 71. In ACT 71, the processor 61 corrects the number of items of the selected provisional registration record to the number of items included in the corrected number of items command. In ACT 72, the processor 61 changes the selected provisional registration record to a registration record of final registration. The processor 61 ends the provisional registration cancellation processing for the customer who purchase the commodity specified by the registration record of the provisional registration.

On the other hand, if receiving the nonpurchase command from the accounting machine 40 in response to the purchase confirmation display command, that is, if a response to the effect that the commodity specified by the registration record of the provisional registration is not purchased is transmitted from the accounting machine 40, the processor 61 determines NO in ACT 63 and proceeds to ACT 73. In ACT 73, the processor 61 delete the selected provisional registration record from the purchase list 632.

Subsequently, in ACT 74, the processor 61 searches through all the other purchase lists 632. The processor 61 detects the other purchase lists 632 in which a registration record including the provisional registration number of the selected provisional registration record is saved. In ACT 75, the processor 61 confirms whether only one purchase list 632 is detected. If only one purchase list 632 is detected, the processor 61 determines YES in ACT 75 and proceeds to ACT 76. In ACT 76, the processor 61 changes the selected provisional registration record to a registration record of final registration. If a plurality of purchase lists are detected, the processor 61 skips the processing in ACT 76. The processor 61 ends the provisional registration cancellation processing for the customer who does not purchase the commodity specified by the registration record of the provisional registration.

The processor 61, which ends the provisional registration cancellation processing, returns to the processing in ACT 8 in FIG. 11. The processor 61 executes the processing in ACT 8 and subsequent acts in the same manner as explained above. Therefore, if a registration record of provisional registration is further present in the accounting purchase list 632T, the processor 61 executes the provisional registration cancellation processing again. In this way, all the registration records registered in the accounting purchase list 632T change to final registration. Therefore, the processor 61 executes the processing in ACT 10 and subsequent acts in the same manner as explained above.

The processor 61 of the sales management device 60 executes the processing in ACT 1 and ACT 3 in FIG. 11 in cooperation with the commodity monitoring device 30 to thereby configure a movement detecting unit and a commodity-return detecting unit. That is, the processor 61 analyzes the movement notification command 70 received from the commodity monitoring device 30. If the movement notification command 70 is the movement notification command 70 in the purchase direction, the processor 61 detects movement involved in purchase of a commodity displayed in the display place. If the movement notification command 70 is the movement notification command in the commodity return direction, the processor 61 detects a commodity return to the display place.

The processor 61 executes the processing in ACT 21 to ACT 23 in FIG. 12 in cooperation with the person tracking device 20 to thereby configure a purchase customer specifying unit. That is, the processor 61 specifies, as a customer located near (that is, in proximity to) the display place where the movement of the commodity is detected by the movement detecting unit, a customer identified by the customer ID included in the response command from the person tracking device 20.

The processor 61 executes the processing in ACT 31 to ACT 33 in FIG. 13 in cooperation with the person tracking device 20 to thereby configure a commodity-return-customer specifying unit. That is, the processor 61 specifies, as a customer located near the display place where the commodity return is detected by the commodity-return detecting unit, the customer identified by the customer ID included in the response command from the person tracking device 20.

The processor 61 executes the processing in ACT 26 and ACT 27 in FIG. 12 to thereby configure a final registration unit. The processor 61 executes the processing in ACT 26 and ACT 28 to thereby configure a provisional registration unit. That is, if one customer ID is included in the response command, the processor 61 finally registers purchase data of a purchased commodity in the purchase list 632 of a customer identified by the customer ID. If a plurality of customer IDs are included in the response command, the processor 61 provisionally registers the sales data of the purchased commodity in the purchase lists 632 of customers respectively identified by the customer IDs.

The processor 61 executes the processing in ACT 6 to ACT 11 in FIG. 11 to thereby configure a control unit. That is, if receiving an accounting instruction command including a customer ID of a customer whose provisionally registered sales data is not included in the sales data registered in the purchase list, the processor 61 outputs accounting data to the accounting machine 40 to permit accounting. If receiving an accounting instruction command including a customer ID of a customer whose provisionally registered sales data is included in the sales data registered in the purchase list, the processor 61 does not shift to the creation processing for accounting data. That is, the processor 61 does not permit accounting for the customer.

The processor 61 executes the processing in ACT 61 to ACT 64 in FIG. 15 in cooperation with the accounting machine 40 to thereby configure an inquiring unit. That is, during accounting for a customer whose provisionally registered sales data is included in the purchase list 632, the processor 61 causes the touch panel 45 of the accounting machine 40 to display the purchase confirmation image SC 1 to thereby inquire whether the customer purchases a commodity. Further, the processor 61 causes the touch panel 45 of the accounting machine 40 to display the number of items confirmation image SC2 to thereby inquire about the number of purchased items.

The processor 61 executes the processing in ACT 65 to ACT 68 to thereby configure a purchase processing unit. That is, if receiving, in response to the inquiry, from the customer, a response to the effect that the customer purchases a commodity and receiving a response to the effect that the number of purchased items coincides, the processor 61 changes the sales data of the provisional registration to final registration and deletes the sales data provisionally registered in the purchase lists 632 of other customers. If receiving, from the customer, a response to the effect that the number of purchased items does not coincide, the processor 61 corrects the number of purchased items of the sales data and changes the sales data to final registration and does not delete the sales data provisionally registered in the purchase lists 632 of the other customers.

The processor 61 executes the processing in ACT 73 to thereby configure a nonpurchase processing unit. The processor 61 executes the processing in ACT 74 to ACT 76 to thereby configure an other-person changing unit. That is, if receiving, in response to the inquiry, a response to the effect that the customer does not purchase a commodity, the processor 61 deletes the sales data from the purchase list 632. If there is only one purchase list 632 of another customer in which the sales data deleted by the nonpurchase processing unit is provisionally registered, the processor 61 changes the sales data to final registration.

The processor 61 executes the processing in ACT 36 to ACT 44 in FIG. 13 to thereby configure a first commodity-return processing unit. That is, if there is one customer who is specified by the commodity-return-customer specifying unit and whose sales data of a returned commodity is registered in the purchase list 632, the processor 61 deletes the sales data from the purchase list 632 if the sales data is finally registered data. If the sales data is provisionally registered data, the processor 61 deletes the provisionally registered sales data from the purchase lists 632 of the other customers in addition to the purchase list 632 of the customer.

The processor 61 executes the processing in ACT 51 to ACT 57 in FIG. 14 to thereby configure a second commodity-return processing unit. That is, if there are a plurality of customers who are specified by the commodity-return-customer specifying unit and whose sales data of returned commodities is registered in the purchase lists 632, the processor 61 changes the sales data to provisional registration for a finally registered customer. The processor 61 does not change the sales data for a provisionally registered customer.

Action effects of the sales management device 60 including the processor 61 including the units explained above are explained. If movement in the purchase direction of the commodity AAA is confirmed by the commodity monitoring device 30 and it is confirmed by the person tracking device 20 that a customer present in a display place of the commodity AAA is one customer M identified by the customer ID "CID0001", in the sales management device 60, a purchase record of the commodity AAA is finally registered in the purchase list 632A with the customer ID "CID0001". Similarly, if movement in the purchase direction of the commodity BBB is confirmed and it is confirmed that a customer present in a display place of the commodity BBB is one customer M, a purchase record of the commodity BBB is finally registered in the purchase list 632A with the customer ID "CID0001". If movement in the purchase direction of the commodity DDD is confirmed and it is confirmed that a customer present in a display place of the commodity DDD is one customer N identified by the customer ID "CID0002", in the sales management device 60, a purchase record of the commodity DDD is finally registered in the purchase list 632B with the customer ID "CID0002".

On the other hand, if movement in the purchase direction of the commodity CCC is confirmed by the commodity monitoring device 30 and it is confirmed by the person tracking device 20 that customers present in a display place of the commodity CCC are two customers M and N, in the sales management device 60, a purchase record of the commodity CCC is provisionally registered in the purchase list 632A with the customer ID "CID0001" and the purchase list 632B with the customer ID "CID0002".

Thereafter, it is assumed that the customer ID "CID0002" of the customer N is read by the reader 46 of the accounting machine 40 first. In this case, since a registration record of provisional registration is present in the purchase list 632B with the customer ID "CID0002", in the sales management device 60, accounting for the customer N is not permitted. Similarly, if the customer ID "CID0001" of the customer M is read by the reader 46 of the accounting machine 40 first, since a registration record of provisional registration is present in the purchase list 632A with the customer ID "CID0001", in the sales management device 60, accounting for the customer M is not permitted.

On the other hand, if a registration record of provisional registration is absent in the purchase list 632B with the customer ID "CID0002", accounting for the customer N is permitted. Similarly, if a registration record of provisional registration is absent in the purchase list 632A with the customer ID "CID0001", accounting for the customer M is permitted.

In this way, accounting is permitted only for a customer whose registration record of provisional registration is absent in the purchase list 632. Therefore, it is possible to prevent a deficiency that accounting is executed with data of the purchase list 632 in which a registration record of a commodity, a purchasing customer of which is not specified, is registered.

If the customer ID "CID0002" of the customer N is read by the reader 46 of the accounting machine 40 first, the purchase configuration image SC1 illustrated in FIG. 16 is displayed on the accounting machine 40. If the customer N purchases the commodity CCC, the customer N touches the "YES" button BT1. Then, the number of items confirmation image SC2 illustrated in FIG. 17 is displayed on the accounting machine 40. If the customer N purchases two items of the commodity CCC, the customer N touches the "YES" button BT3. Then, the purchase record of the commodity CCC provisionally registered in the purchase list 632B with the customer ID "CID0002" is changed to final registration. The purchase record of the commodity CCC provisionally registered in the purchase list 632A with the customer ID "CID0001" is deleted. As a result, all the registration records registered in the purchase list 632A with the customer ID "CID0001" and the purchase list 632B with the customer ID "CID0002" change to final registration. Therefore, the accounting for the customer M and the customer N is permitted.

On the other hand, if the customer N does not purchase the commodity CCC, the customer N touches the "NO" button BT2 of the purchase configuration image SC1. Then, the purchase record of the commodity CCC provisionally registered in the purchase list 632B with the customer ID "CID0002" is deleted. The purchase record of the commodity CCC provisionally registered in the purchase list 632A with the customer ID "CID0001" is changed to final registration. As a result, all the registration records registered in the purchase list 632A with the customer ID "CID0001" and the purchase list 632B with the customer ID "CID0002" change to final registration. Therefore, the accounting for the customer M and the customer N is permitted.

Incidentally, the action explained above is the same if the customer ID "CID0001" of the customer M is read by the reader 46 of the accounting machine 40 first.

Incidentally, if the customer N purchases only one item of the commodity CCC, the customer N touches the "NO" button BT4 of the number of items confirmation image SC2. Then, the number of items correction image SC3 illustrated in FIG. 18 is displayed on the accounting machine 40. Accordingly, the customer N operates the tenkey button BT5 to input the number of purchased items "1" and touches the decision button BT6. Then, the number of items of the purchase record of the commodity CCC provisionally registered in the purchase list 632B with the customer ID "CID0002" is corrected and the purchase record is changed to final registration. At this time, the purchase record of the commodity CCC provisionally registered in the purchase list 632A with the customer ID "CID0001" is not changed. Therefore, the accounting for the customer N is permitted but the accounting for the customer M is not permitted.

Thereafter, if the customer ID "CID0001" of the customer M is read by the reader 46 of the accounting machine 40, the purchase confirmation image SC 1 is displayed on the accounting machine 40. If the customer M purchases the commodity CCC, the customer M touches the "YES" button BT1. Then, the number of items confirmation image SC2 is displayed on the accounting machine 40. If the customer M purchases one item of the commodity CCC, the customer M touches the "NO" button BT4 of the number of items confirmation image SC2. Then, the number of items correction image SC3 is displayed on the accounting machine 40. Accordingly, the customer M operates the tenkey button BT5 to input the number of purchased items "1" and touches the decision button BT6. Then, the number of items of the purchase record of the commodity CCC provisionally registered in the purchase list 632A with the customer ID "CID0001" is corrected and the purchase record is changed to final registration. Therefore, the accounting for the customer M is also permitted.

With the sales management device 60 acting as explained above, even if a customer who purchases the commodity "CCC" cannot be specified because the two customers M and N are present in the display place of the commodity "CCC", the customer who purchases the commodity "CCC" can be specified by executing the provisional registration cancellation processing. The provisional registration cancellation processing is processing for outputting image data to the accounting machine 40 and simple processing for changing a registration record of provisional registration to final registration or deleting the registration record according to a response command from the accounting machine 40. Therefore, since complicated information processing in which a processing load of a computer increases is unnecessary, it is possible to achieve an effect that a processing load of the computer configuring the sales management device 60 can be greatly reduced. Since the processing load of the computer can be greatly reduced, a time required for the information processing of the sales management device 60 is also reduced. As a result, in the sales management system 1 that enables sales of commodities displayed in the store without involvement of a store clerk, it is possible to achieve an effect that a processing time from an end of shopping to an end of accounting can be reduced.

The action of the sales management device 60 explained above transitions in the same manner if a customer who purchases the commodity "CCC" cannot be specified because three or more customers are present in the display place of the commodity "CCC". Processing is different only if the customer confirming the purchase confirmation screen SC1 touches the "NO" button BT2 and the registration record of the commodity "CCC" still remains as the provisional registration in the purchase lists 632 of two or more customers. That is, at that point in time, it cannot be specified who among the other customers purchases the commodity "CCC". Therefore, the registration record of the commodity "CCC" provisionally registered in the purchase lists 632 of the other customers is not changed to final registration.

Incidentally, the customer sometimes returns a once purchased commodity to a display place before accounting. In that case, the commodity return processing is performed in the sales management device 60. For example, in the example explained above, if the customer M returns two items of the commodity CCC, the provisionally registered registration record of the commodity CCC is deleted from the purchase list 632A with the customer ID "CID0001". At this time, if the customer N is absent in the display place of the commodity CCC, since the registration record of the commodity CCC provisionally registered in the purchase list 632B with the customer ID "CID0002" is a record of an unpurchased commodity, the registration record is deleted from the purchase list 632B.

On the other hand, if the customer M returns only one item of the commodity CCC, the numbers of items of the registration records of the commodity CCC respectively registered in the purchase lists 632A and 632B with the customer ID "CID0001" and the customer ID "CID0002" are changed to "1". However, it cannot be specified whether the remaining one item of the commodity CCC is purchased by the customer M or purchased by the customer N. Accordingly, the registration record of the commodity CCC is left in the purchase lists 632A and 632B as the provisional registration.

If the customer N is also present in the display place of the commodity CCC when the customer M returns the two items of the commodity CCC, it cannot be specified which customer returns the commodity CCC. Accordingly, the registration records of the commodity CCC respectively provisionally registered in the purchase lists 632A and 632B with the customer ID "CID0001" and the customer ID "CID0002" are not changed.

As another example, it is assumed that the customer N purchases the same commodity AAA at time different from time when the customer M purchases the commodity AAA. In this case, the registration records of the commodity AAA are finally registered in both of the purchase lists 632A and 632B with the customer ID "CID0001" and the customer ID "CID0002". If the customer N is accidentally present in the display place of the commodity "AAA" when the customer M returns the commodity "AAA" before accounting, the customer who returns the commodity "AAA" cannot be specified. In this case, both of the registration records of the commodity AAA registered in the purchase lists 632A and 632B with the customer ID "CID0001" and the customer ID "CID0002" are changed to provisional registration. Consequently, it is possible to prevent accounting from being executed with the purchase list 632 in which a registration record of a commodity, a purchaser of which is unspecified because of a commodity return action of the customer, is registered.

The sales management device in at least one embodiment that can reduce a load required for information processing of the sales management system that enables sales of commodities displayed in a store without involvement of a store clerk is explained above. However, the embodiments are not limited to the foregoing.

For example, in at least one embodiment, the creation region for the purchase list 632 is formed in the auxiliary storage device 63 of the sales management device 60. The creation region for the purchase list 632 may be formed in a storage device of a device other than the sales management device 60. For example, the creation region for the purchase list 632 may be formed in the auxiliary storage device 23 of the person tracking device 20. Alternatively, the creation region for the purchase list 632 may be formed in an auxiliary storage device of the store server 50.

In at least one embodiment, as an example, the processor 61 causes the accounting machine 40 to display the purchase confirmation image SC1, the number of items confirmation image SC2, and the number of items correction image SC3. A display destination of these images is not limited to the accounting machine 40. For example, a communication address of a communication terminal such as a smartphone or a tablet terminal carried by a customer may be correlated with a customer ID of the customer and registered in a member database or the like to cause a display of the communication terminal to display the images. Consequently, the customer can change registration data provisionally registered in the purchase list 632 to final registration or can delete the registration data any time before accounting.

## Claims

1. A sales management device comprising:
- a storage region for storing, for each customer, a purchase list, the purchase list of a customer comprising a purchase record for each commodity purchased by the customer, each purchase record comprising a number of pieces and a registration flag for identifying whether the purchase record is a purchase record of a final registration or a purchase record of a provisional registration, and
- a processing circuitry having programmed instructions to:
receive first data from a first sensor indicating movement of a commodity displayed in a display place;
receive second data from a second sensor identifying at least one customer located proximate the display place when the commodity is moved, the at least one customer including a first customer;
provisionally register, in response to a determination that a plurality of customers are identified in the second data, sales data of the commodity in the purchase lists of the identified respective customers, and, for each identified customers, define that the registration flag of the commodity in the purchase list is a provisional registration and add the number of items of the commodity;
prevent accounting for the first customer in response to a determination that the purchase list of the first customer includes provisionally registered sales data based on determining that a registration flag identifies a purchase record as a purchase record of a provisional registration;
in response to a determination that only one customer is identified in the second data, define that the registration flag of the commodity in the purchase list of the first customer is a final registration and finalize registration of the sales data of the commodity in the purchase list of the first customer;
permit accounting for the first customer in response to a determination that the purchase list of the first customer does not include provisionally registered sales data; and
provide an inquiry to the first customer, in response to the determination that the purchase list of the first customer includes provisionally registered sales data, in order to determine the number of pieces of the commodity the first customer intends to purchase;
correct, in response to receiving a response to the inquiry, the number of pieces of the commodity in the sales data in the purchase list of the first customer and change the sales data in the purchase list of the first customer to final registration without deleting sales data provisionally registered in a purchase list of a second customer in response to a determination that the number of pieces of the commodity in the sales data in the purchase list of the first customer is not equal to the number of pieces of the commodity that the first customer intends to purchase; and
change, in response to receiving a response to the inquiry, the sales data in the purchase list of the first customer to final registration and delete sales data provisionally registered in a purchase list of a second customer in response to a determination that the number of pieces of the commodity in the sales data in the purchase list of the first customer is equal to the number of pieces of the commodity that the first customer intends to purchase.

2. The sales management device of claim 1, wherein the processing circuitry has programmed instructions to:
provide an inquiry to the first customer asking whether the first customer intends to purchase the commodity in response to the determination that the purchase list of the first customer includes provisionally registered sales data.

3. The sales management device of claim 2, wherein the processing circuitry has programmed instructions to:
delete the sales data of the commodity from the purchase list of the first customer in response to receiving a response to the inquiry indicating that the first customer does not intend to purchase the commodity.

4. The sales management device of claim 3, wherein the processing circuitry has programmed instructions to:
change sales data of the commodity in a purchase list of a second customer to final registration in response to both (a) receiving the response to the inquiry indicating that the first customer does not intend to purchase the commodity and (b) a determination that sales data of the commodity is not present in purchase lists of any other customers.

5. The sales management device of claim 3, wherein the processing circuitry has programmed instructions to:
change sales data of the commodity in a purchase list of a second customer to final registration in response to both (a) receiving a response to the inquiry indicating that the first customer does not intend to purchase the commodity and (b) a determination that the at least one customer identified in the second data includes only the first customer and the second customer.

6. The sales management device of claim 1, wherein the processing circuitry has programmed instructions to:
provide an inquiry to the first customer asking whether the first customer intends to purchase the commodity in response to the determination that the purchase list of the first customer includes provisionally registered sales data; and
change the sales data in the purchase list of the first customer to final registration and delete sales data provisionally registered in a purchase list of a second customer in response to receiving a response to the inquiry indicating that the first customer intends to purchase the commodity.

7. The sales management device of claim 1, wherein the processing circuitry has programmed instructions to:
receive third data indicating that a second commodity has been returned to a second display place;
receive fourth data identifying at least one customer located near the second display place when the second commodity is returned, wherein the at least one customer located near the second display place includes a second customer; and
delete finally registered sales data of the second commodity from a purchase list of the second customer in response to a determination that only one customer is identified in the fourth data.

8. The sales management device of claim 1, wherein the processing circuitry has programmed instructions to:
receive third data indicating that a second commodity has been returned to a second display place;
receive fourth data identifying at least one customer located near the second display place when the second commodity is returned, wherein the at least one customer located near the second display place includes a second customer; and
delete provisionally registered sales data of the second commodity from a purchase list of the second customer and from a purchase list of a third customer in response to a determination that only one customer is identified in the fourth data.

9. The sales management device of claim 1, wherein the processing circuitry has programmed instructions to:
receive third data indicating that a second commodity has been returned to a second display place;
receive fourth data identifying at least one customer located near the second display place when the second commodity is returned; and
in response to a determination that both (a) the fourth data identifies a second customer and a third customer and (b) purchase lists of each of the second customer and the third customer include sales data of the second commodity, change the sales data of the second commodity in the purchase list of the second customer from final registration to provisional registration and retain the sales data of the second commodity in the purchase list of the third customer as provisionally registered.

10. A sales management method comprising:
storing, for each customer, a purchase list comprising a purchase record for each commodity purchased by the customer, each purchase record comprising a number of pieces and a registration flag for identifying whether the purchase record is a purchase record of a final registration or a purchase record of a provisional registration;
detecting, by a first sensor, movement of a commodity displayed in a display place;
identifying, by a second sensor, at least one customer located near the display place where the movement of the commodity is detected, the at least one customer including a first customer;
in response to only one customer being identified, defining that the registration flag of the commodity in the purchase list of the first customer is a final registration and finalizing registration of sales data of the commodity in a purchase list of the first customer;
provisionally registering, in response to a plurality of customers being identified, the sales data of the commodity in the purchase lists of the identified respective customers, and, for each identified customers, defining that the registration flag of the commodity in the purchase list is a provisional registration and add the number of items of the commodity ;
permitting accounting for the first customer in response to determining that the purchase list of the first customer does not include provisionally registered sales data;
preventing accounting for the first customer in response to determining that the purchase list of the first customer includes provisionally registered sales data
providing, in response to the determination that the purchase list of the first customer includes provisionally registered sales data, by a display, an inquiry to the first customer asking a number of pieces of the commodity that the first customer intends to purchase;
correcting, in response to receiving a response to the inquiry, the number of pieces of the commodity in the sales data in the purchase list of the first customer and changing the sales data in the purchase list of the first customer to final registration without deleting sales data provisionally registered in a purchase list of a second customer in response to a determination that the number of pieces of the commodity in the sales data in the purchase list of the first customer is not equal to the number of pieces of the commodity that the first customer intends to purchase; and
changing, in response to receiving a response to the inquiry, the sales data in the purchase list of the first customer to final registration and deleting sales data provisionally registered in a purchase list of a second customer in response to a determination that the number of pieces of the commodity in the sales data in the purchase list of the first customer is equal to the number of pieces of the commodity that the first customer intends to purchase.

11. The sales management method of claim 10, further comprising:
providing, by a display, an inquiry to the first customer asking whether the first customer intends to purchase the commodity in response to the determination that the purchase list of the first customer includes provisionally registered sales data; and
deleting the sales data of the commodity from the purchase list of the first customer in response to receiving a response to the inquiry indicating that the first customer does not intend to purchase the commodity.

12. The sales management method of claim 10, further comprising:
providing, by a display, an inquiry to the first customer asking whether the first customer intends to purchase the commodity in response to the determination that the purchase list of the first customer includes provisionally registered sales data; and
changing the sales data in the purchase list of the first customer to final registration and deleting sales data provisionally registered in a purchase list of a second customer in response to receiving a response to the inquiry indicating that the first customer intends to purchase the commodity.

13. A sales management system comprising:
a first sensor configured to detect removal of a commodity from a display place;
a second sensor configured to identify at least one customer located near the display place where the removal of the commodity is detected by the first sensor, the at least one customer including a first customer;
a storage region configured to store, for each customer, a purchase list, the purchase list of a customer comprising a purchase record for each commodity purchased by the customer, each purchase record comprising a number of pieces and a registration flag for identifying whether the purchase record is a purchase record of a final registration or a purchase record of a provisional registration; and
at least one processor configured to communicate with both the first sensor and the second sensor and programmed to perform the sales management method of any one of claims 10 to 12.

## Patentansprüche

1. Vertriebsmanagementvorrichtung, umfassend:
- einen Speicherbereich zum Speichern einer Einkaufsliste für jeden Kunden, die Einkaufsliste eines Kunden umfassend einen Kaufdatensatz für jede von dem Kunden gekaufte Ware, jeder Kaufdatensatz umfassend eine Stückzahl und ein Registrierungskennzeichen, um zu identifizieren, ob der Kaufdatensatz ein Kaufdatensatz einer endgültigen Registrierung oder ein Kaufdatensatz einer provisorischen Registrierung ist, und
- eine Verarbeitungsschaltung, die programmierte Anweisungen zu Folgendem aufweist:
Erhalten von ersten Daten von einem ersten Sensor, die eine Bewegung einer Ware angeben, die an einem Ausstellungsort ausgestellt wird;
Erhalten von zweiten Daten von einem zweiten Sensor, der mindestens einen Kunden identifiziert, der sich in der Nähe des Ausstellungsorts befindet, wenn die Ware bewegt wird, wobei der mindestens eine Kunde einen ersten Kunden beinhaltet;
als Reaktion auf eine Bestimmung, dass mehrere Kunden in den zweiten Daten identifiziert werden, provisorisches Registrieren von Vertriebsdaten der Ware in den Einkaufslisten der jeweiligen identifizierten Kunden und, für jeden identifizierten Kunden, Definieren, dass das Registrierungskennzeichen der Ware in der Einkaufsliste eine provisorische Registrierung ist, und Hinzufügen der Anzahl an Artikeln der Ware;
Verhindern einer Abrechnung für den ersten Kunden als Reaktion auf eine Bestimmung, dass die Einkaufsliste des ersten Kunden provisorisch registrierte Vertriebsdaten beinhaltet, basierend auf einem Bestimmen, dass ein Registrierungskennzeichen einen Kaufdatensatz als Kaufdatensatz einer provisorischen Registrierung identifiziert;
als Reaktion auf eine Bestimmung, dass nur ein Kunde in den zweiten Daten identifiziert wird, Definieren, dass das Registrierungskennzeichen der Ware in der Einkaufsliste des ersten Kunden eine endgültige Registrierung ist, und Abschließen der Registrierung der Vertriebsdaten der Ware in der Einkaufsliste des ersten Kunden;
Zulassen einer Abrechnung für den ersten Kunden als Reaktion auf eine Bestimmung, dass die Einkaufsliste des ersten Kunden keine provisorisch registrierten Vertriebsdaten beinhaltet; und
Bereitstellen einer Anfrage an den ersten Kunden, um die Stückzahl der Ware zu bestimmen, die der erste Kunde zu kaufen beabsichtigt, als Reaktion auf die Bestimmung, dass die Einkaufsliste des ersten Kunden provisorisch registrierte Vertriebsdaten beinhaltet;
Korrigieren, als Reaktion auf ein Erhalten einer Antwort auf die Anfrage, der Stückzahl der Ware in den Vertriebsdaten in der Einkaufsliste des ersten Kunden und Ändern der Vertriebsdaten in der Einkaufsliste des ersten Kunden in eine endgültige Registrierung, ohne Vertriebsdaten zu löschen, die provisorisch in einer Einkaufsliste eines zweiten Kunden registriert sind, als Reaktion auf eine Bestimmung, dass die Stückzahl der Ware in den Vertriebsdaten in der Einkaufsliste des ersten Kunden nicht gleich wie die Stückzahl der Ware ist, die der erste Kunde zu kaufen beabsichtigt; und
Ändern, als Reaktion auf ein Erhalten einer Antwort auf die Anfrage, der Vertriebsdaten in der Einkaufsliste des ersten Kunden in die endgültige Registrierung und Löschen provisorisch registrierter Vertriebsdaten in einer Einkaufsliste eines zweiten Kunden als Reaktion auf eine Bestimmung, dass die Stückzahl der Ware in den Vertriebsdaten in der Einkaufsliste des ersten Kunden gleich wie die Stückzahl der Ware ist, die der erste Kunde zu kaufen beabsichtigt.

2. Vertriebsmanagementvorrichtung nach Anspruch 1, wobei die Verarbeitungsschaltung programmierte Anweisungen zu Folgendem aufweist:
Bereitstellen einer Anfrage an den ersten Kunden, um zu fragen, ob der erste Kunde beabsichtigt, die Ware zu kaufen, als Reaktion auf die Bestimmung, dass die Einkaufsliste des ersten Kunden provisorisch registrierte Vertriebsdaten beinhaltet.

3. Vertriebsmanagementvorrichtung nach Anspruch 2, wobei die Verarbeitungsschaltung programmierte Anweisungen zu Folgendem aufweist:
Löschen der Vertriebsdaten der Ware aus der Einkaufsliste des ersten Kunden als Reaktion auf ein Erhalten einer Antwort auf die Anfrage, die angibt, dass der erste Kunde nicht beabsichtigt, die Ware zu kaufen.

4. Vertriebsmanagementvorrichtung nach Anspruch 3, wobei die Verarbeitungsschaltung programmierte Anweisungen zu Folgendem aufweist:
Ändern von Vertriebsdaten der Ware in einer Einkaufsliste eines zweiten Kunden in eine endgültige Registrierung als Reaktion sowohl auf (a) ein Erhalten der Antwort auf die Anfrage, die angibt, dass der erste Kunde nicht beabsichtigt, die Ware zu kaufen, als auch auf (b) eine Bestimmung, dass die Vertriebsdaten der Ware nicht in den Einkaufslisten eines beliebigen anderen Kunden vorhanden sind.

5. Vertriebsmanagementvorrichtung nach Anspruch 3, wobei die Verarbeitungsschaltung programmierte Anweisungen zu Folgendem aufweist:
Ändern von Vertriebsdaten der Ware in einer Einkaufsliste eines zweiten Kunden in eine endgültige Registrierung als Reaktion sowohl auf (a) Erhalten einer Antwort auf die Anfrage, die angibt, dass der erste Kunde nicht beabsichtigt, die Ware zu kaufen, als auch auf (b) eine Bestimmung, dass der mindestens eine in den zweiten Daten identifizierte Kunde nur den ersten Kunden und den zweiten Kunden beinhaltet.

6. Vertriebsmanagementvorrichtung nach Anspruch 1, wobei die Verarbeitungsschaltung programmierte Anweisungen zu Folgendem aufweist:
Bereitstellen einer Anfrage an den ersten Kunden, um zu fragen, ob der erste Kunde beabsichtigt, die Ware zu kaufen, als Reaktion auf die Bestimmung, dass die Einkaufsliste des ersten Kunden provisorisch registrierte Vertriebsdaten beinhaltet; und
Ändern der Vertriebsdaten in der Einkaufsliste des ersten Kunden in eine endgültige Registrierung und Löschen der provisorisch registrierten Vertriebsdaten in einer Einkaufsliste eines zweiten Kunden, wenn eine Antwort auf die Anfrage erhalten wird, die angibt, dass der erste Kunde beabsichtigt, die Ware zu kaufen.

7. Vertriebsmanagementvorrichtung nach Anspruch 1, wobei die Verarbeitungsschaltung programmierte Anweisungen zu Folgendem aufweist:
Erhalten von dritten Daten, die angeben, dass eine zweite Ware an einen zweiten Ausstellungsort zurückgegeben wurde;
Erhalten von vierten Daten, die mindestens einen Kunden identifizieren, der sich in der Nähe des zweiten Ausstellungsorts befindet, wenn die zweite Ware zurückgegeben wird, wobei der mindestens eine Kunde, der sich in der Nähe des zweiten Ausstellungsorts befindet, einen zweiten Kunden beinhaltet; und
Löschen endgültig registrierter Vertriebsdaten der zweiten Ware aus einer Einkaufsliste des zweiten Kunden, als Reaktion auf eine Bestimmung, dass nur ein Kunde in den vierten Daten identifiziert wird.

8. Vertriebsmanagementvorrichtung nach Anspruch 1, wobei die Verarbeitungsschaltung programmierte Anweisungen zu Folgendem aufweist:
Erhalten von dritten Daten, die angeben, dass eine zweite Ware an einen zweiten Ausstellungsort zurückgegeben wurde;
Erhalten von vierten Daten, die mindestens einen Kunden identifizieren, der sich in der Nähe des zweiten Ausstellungsorts befindet, wenn die zweite Ware zurückgegeben wird, wobei der mindestens eine Kunde, der sich in der Nähe des zweiten Ausstellungsorts befindet, einen zweiten Kunden beinhaltet; und
Löschen provisorisch registrierter Vertriebsdaten der zweiten Ware aus einer Einkaufsliste des zweiten Kunden und aus einer Einkaufsliste eines dritten Kunden, als Reaktion auf eine Bestimmung, dass nur ein Kunde in den vierten Daten identifiziert wird.

9. Vertriebsmanagementvorrichtung nach Anspruch 1, wobei die Verarbeitungsschaltung programmierte Anweisungen zu Folgendem aufweist:
Erhalten von dritten Daten, die angeben, dass eine zweite Ware an einen zweiten Ausstellungsort zurückgegeben wurde;
Erhalten von vierten Daten, die mindestens einen Kunden identifizieren, der sich in der Nähe des zweiten Ausstellungsorts befindet, wenn die zweite Ware zurückgegeben wird; und
als Reaktion auf die Bestimmung, dass sowohl (a) die vierten Daten einen zweiten Kunden und einen dritten Kunden identifizieren, als auch (b) die Einkaufslisten von jedem von dem zweiten Kunden und dem dritten Kunden Vertriebsdaten der zweiten Ware beinhalten, Ändern der Vertriebsdaten der zweiten Ware in der Einkaufsliste des zweiten Kunden von der endgültigen Registrierung in die provisorische Registrierung und Beibehalten der Vertriebsdaten der zweiten Ware in der Einkaufsliste des dritten Kunden als provisorisch registriert.

10. Vertriebsmanagementverfahren, umfassend:
Speichern, für jeden Kunden, einer Einkaufsliste, umfassend einen Kaufdatensatz für jede von dem Kunden gekaufte Ware, jeder Kaufdatensatz umfassend eine Stückzahl und ein Registrierungskennzeichen, um zu identifizieren, ob der Kaufdatensatz ein Kaufdatensatz einer endgültigen Registrierung oder ein Kaufdatensatz einer provisorischen Registrierung ist;
Erfassen, durch einen ersten Sensor, einer Bewegung einer Ware, die an einem Ausstellungsort ausgestellt wird;
Identifizieren, durch einen zweiten Sensor, von mindestens einem Kunden, der sich in der Nähe des Ausstellungsorts befindet, an dem eine Bewegung der Ware erfasst wird, wobei der mindestens eine Kunde einen ersten Kunden beinhaltet;
als Reaktion darauf, dass nur ein Kunde identifiziert wurde, Definieren, dass das Registrierungskennzeichen der Ware in der Einkaufsliste des ersten Kunden eine endgültige Registrierung ist, und Abschließen der Registrierung von Vertriebsdaten der Ware in einer Einkaufsliste des ersten Kunden;
provisorisches Registrieren, als Reaktion auf die Identifizierung einer Vielzahl von Kunden, der Vertriebsdaten der Ware in den Einkaufslisten der identifizierten jeweiligen Kunden und, für jeden identifizierten Kunden, Definieren, dass das Registrierungskennzeichen der Ware in der Einkaufsliste eine provisorische Registrierung ist, und Hinzufügen der Anzahl von Artikeln der Ware;
Zulassen einer Abrechnung für den ersten Kunden als Reaktion auf ein Bestimmen, dass die Einkaufsliste des ersten Kunden keine provisorisch registrierten Vertriebsdaten beinhaltet;
Verhindern einer Abrechnung für den ersten Kunden als Reaktion auf ein Bestimmen, dass die Einkaufsliste des ersten Kunden provisorisch registrierte Vertriebsdaten beinhaltet;
Bereitstellen, als Reaktion auf die Bestimmung, dass die Einkaufsliste des ersten Kunden provisorisch registrierte Verkaufsdaten beinhaltet, durch eine Anzeige, einer Anfrage an den ersten Kunden, in der nach der Stückzahl der Ware gefragt wird, die der erste Kunde zu kaufen beabsichtigt;
Korrigieren, als Reaktion auf ein Erhalten einer Antwort auf die Anfrage, der Stückzahl der Ware in den Vertriebsdaten in der Einkaufsliste des ersten Kunden und Ändern der Vertriebsdaten in der Einkaufsliste des ersten Kunden in eine endgültige Registrierung, ohne Vertriebsdaten zu löschen, die provisorisch in einer Einkaufsliste eines zweiten Kunden registriert sind, als Reaktion auf eine Bestimmung, dass die Stückzahl der Ware in den Vertriebsdaten in der Einkaufsliste des ersten Kunden nicht gleich wie die Stückzahl der Ware ist, die der erste Kunde zu kaufen beabsichtigt; und
Ändern, als Reaktion auf ein Erhalten einer Antwort auf die Anfrage, der Vertriebsdaten in der Einkaufsliste des ersten Kunden in die endgültige Registrierung und Löschen provisorisch registrierter Vertriebsdaten in einer Einkaufsliste eines zweiten Kunden als Reaktion auf eine Bestimmung, dass die Stückzahl der Ware in den Vertriebsdaten in der Einkaufsliste des ersten Kunden gleich wie die Stückzahl der Ware ist, die der erste Kunde zu kaufen beabsichtigt.

11. Vertriebsmanagementverfahren nach Anspruch 10, ferner umfassend:
Bereitstellen, durch eine Anzeige, einer Anfrage an den ersten Kunden, um zu fragen, ob der erste Kunde beabsichtigt, die Ware zu kaufen, als Reaktion auf die Bestimmung, dass die Einkaufsliste des ersten Kunden provisorisch registrierte Vertriebsdaten beinhaltet; und
Löschen der Vertriebsdaten der Ware aus der Einkaufsliste des ersten Kunden als Reaktion auf ein Erhalten einer Antwort auf die Anfrage, die angibt, dass der erste Kunde nicht beabsichtigt, die Ware zu kaufen.

12. Vertriebsmanagementverfahren nach Anspruch 10, ferner umfassend:
Bereitstellen, durch eine Anzeige, einer Anfrage an den ersten Kunden, um zu fragen, ob der erste Kunde beabsichtigt, die Ware zu kaufen, als Reaktion auf die Bestimmung, dass die Einkaufsliste des ersten Kunden provisorisch registrierte Vertriebsdaten beinhaltet; und
Ändern der Vertriebsdaten in der Einkaufsliste des ersten Kunden in eine endgültige Registrierung und Löschen der provisorisch registrierten Vertriebsdaten in einer Einkaufsliste eines zweiten Kunden, wenn eine Antwort auf die Anfrage erhalten wird, die angibt, dass der erste Kunde beabsichtigt, die Ware zu kaufen.

13. Vertriebsmanagementsystem, umfassend:
einen ersten Sensor, der konfiguriert ist, um eine Entnahme einer Ware von einem Ausstellungsort zu erfassen;
einen zweiten Sensor, der konfiguriert ist, um mindestens einen Kunden zu identifizieren, der sich in der Nähe des Ausstellungsorts befindet, an dem die Entnahme der Ware durch den ersten Sensor erfasst wird, wobei der mindestens eine Kunde einen ersten Kunden beinhaltet;
einen Speicherbereich, der konfiguriert ist, um eine Einkaufsliste für jeden Kunden zu speichern, die Einkaufsliste eines Kunden umfassend einen Kaufdatensatz für jede von dem Kunden gekaufte Ware, jeder Kaufdatensatz umfassend eine Stückzahl und ein Registrierungskennzeichen, um zu identifizieren, ob der Kaufdatensatz ein Kaufdatensatz einer endgültigen Registrierung oder ein Kaufdatensatz einer provisorischen Registrierung ist, und
mindestens einen Prozessor, der konfiguriert ist, um sowohl mit dem ersten Sensor als auch mit dem zweiten Sensor zu kommunizieren, und der programmiert ist, um das Vertriebsmanagementverfahren nach einem der Ansprüche 10 bis 12 durchzuführen.

## Revendications

1. Dispositif de gestion de ventes comprenant :
- une région de stockage pour stocker, pour chaque client, une liste d'achats, la liste d'achats d'un client comprenant un enregistrement d'achat pour chaque marchandise achetée par le client, chaque enregistrement d'achat comprenant un nombre d'unités et un drapeau d'enregistrement pour identifier si l'enregistrement d'achat est un enregistrement d'achat d'un enregistrement final ou un enregistrement d'achat d'un enregistrement provisoire, et
- des circuits de traitement comportant des instructions programmées pour :
recevoir des premières données depuis un premier capteur indiquant un mouvement d'une marchandise présentée dans un emplacement de présentation ;
recevoir des deuxièmes données depuis un deuxième capteur identifiant au moins un client situé à proximité de l'emplacement de présentation lorsque la marchandise est déplacée, l'au moins un client comprenant un premier client ;
enregistrer provisoirement, en réponse à une détermination du fait qu'une pluralité de clients sont identifiés dans les deuxièmes données, des données de vente de la marchandise dans les listes d'achats des clients respectifs identifiés, et, pour chaque client identifié, définir que le drapeau d'enregistrement de la marchandise dans la liste d'achats est un enregistrement provisoire et ajouter le nombre d'unités de la marchandise ;
empêcher la comptabilisation du premier client en réponse à une détermination du fait que la liste d'achats du premier client comprend des données de vente enregistrées provisoirement sur la base de la détermination du fait qu'un drapeau d'enregistrement identifie un enregistrement d'achat comme étant un enregistrement d'achat d'un enregistrement provisoire ;
en réponse à une détermination du fait qu'un seul client est identifié dans les deuxièmes données, définir que le drapeau d'enregistrement de la marchandise dans la liste d'achats du premier client est un enregistrement final et finaliser l'enregistrement des données de vente de la marchandise dans la liste d'achats du premier client ;
autoriser la comptabilisation du premier client en réponse à une détermination du fait que la liste d'achats du premier client ne comprend pas de données de vente enregistrées provisoirement ; et
fournir une requête au premier client, en réponse à la détermination du fait que la liste d'achats du premier client comprend des données de vente enregistrées provisoirement, afin de déterminer le nombre d'unités de la marchandise que le premier client prévoit d'acheter ;
corriger, en réponse à la réception d'une réponse à la requête, le nombre d'unités de la marchandise dans les données de vente dans la liste d'achats du premier client et modifier les données de vente dans la liste d'achats du premier client en enregistrement final sans supprimer les données de vente provisoirement enregistrées dans une liste d'achats d'un deuxième client en réponse à une détermination du fait que le nombre d'unités de la marchandise dans les données de vente dans la liste d'achats du premier client n'est pas égal au nombre d'unités de la marchandise que le premier client prévoit d'acheter ; et
modifier, en réponse à la réception d'une réponse à la requête, les données de vente dans la liste d'achats du premier client en enregistrement final et supprimer les données de vente provisoirement enregistrées dans une liste d'achats d'un deuxième client en réponse à une détermination du fait que le nombre d'unités de la marchandise dans les données de vente dans la liste d'achats du premier client est égal au nombre d'unités de la marchandise que le premier client prévoit d'acheter.

2. Dispositif de gestion de ventes selon la revendication 1, dans lequel les circuits de traitement comportent des instructions programmées pour :
fournir une requête au premier client demandant si le premier client prévoit d'acheter la marchandise en réponse à la détermination du fait que la liste d'achats du premier client comprend des données de vente enregistrées provisoirement.

3. Dispositif de gestion de ventes selon la revendication 2, dans lequel les circuits de traitement comportent des instructions programmées pour :
supprimer les données de vente de la marchandise de la liste d'achats du premier client en réponse à la réception d'une réponse à la requête indiquant que le premier client ne prévoit pas d'acheter la marchandise.

4. Dispositif de gestion de ventes selon la revendication 3, dans lequel les circuits de traitement comportent des instructions programmées pour :
modifier les données de vente de la marchandise dans une liste d'achats d'un deuxième client en enregistrement final en réponse à la fois à (a) la réception de la réponse à la requête indiquant que le premier client ne prévoit pas d'acheter la marchandise et (b) une détermination du fait que des données de vente de la marchandise ne sont présentes dans les listes d'achats d'aucun autre client.

5. Dispositif de gestion de ventes selon la revendication 3, dans lequel les circuits de traitement comportent des instructions programmées pour :
modifier les données de vente de la marchandise dans une liste d'achats d'un deuxième client en enregistrement final en réponse à la fois à (a) la réception d'une réponse à la requête indiquant que le premier client ne prévoit pas d'acheter la marchandise et (b) une détermination du fait que l'au moins un client identifié dans les deuxièmes données comprend uniquement le premier client et le deuxième client.

6. Dispositif de gestion de ventes selon la revendication 1, dans lequel les circuits de traitement comportent des instructions programmées pour :
fournir une requête au premier client demandant si le premier client prévoit d'acheter la marchandise en réponse à la détermination du fait que la liste d'achats du premier client comprend des données de vente enregistrées provisoirement ; et
modifier les données de vente dans la liste d'achats du premier client en enregistrement final et supprimer les données de vente provisoirement enregistrées dans une liste d'achats d'un deuxième client en réponse à la réception d'une réponse à la requête indiquant que le premier client prévoit d'acheter la marchandise.

7. Dispositif de gestion de ventes selon la revendication 1, dans lequel les circuits de traitement comportent des instructions programmées pour :
recevoir des troisièmes données indiquant qu'une deuxième marchandise a été retournée à un deuxième emplacement de présentation ;
recevoir des quatrièmes données identifiant au moins un client situé à proximité du deuxième emplacement de présentation lorsque la deuxième marchandise est retournée, dans lequel l'au moins un client situé à proximité du deuxième emplacement de présentation comprend un deuxième client ; et
supprimer les données de vente enregistrées finalement de la deuxième marchandise d'une liste d'achats du deuxième client en réponse à une détermination du fait qu'un seul client est identifié dans les quatrièmes données.

8. Dispositif de gestion de ventes selon la revendication 1, dans lequel les circuits de traitement comportent des instructions programmées pour :
recevoir des troisièmes données indiquant qu'une deuxième marchandise a été retournée à un deuxième emplacement de présentation ;
recevoir des quatrièmes données identifiant au moins un client situé à proximité du deuxième emplacement de présentation lorsque la deuxième marchandise est retournée, dans lequel l'au moins un client situé à proximité du deuxième emplacement de présentation comprend un deuxième client ; et
supprimer les données de vente enregistrées provisoirement de la deuxième marchandise d'une liste d'achats du deuxième client et d'une liste d'achats d'un troisième client en réponse à une détermination du fait qu'un seul client est identifié dans les quatrièmes données.

9. Dispositif de gestion de ventes selon la revendication 1, dans lequel les circuits de traitement comportent des instructions programmées pour :
recevoir des troisièmes données indiquant qu'une deuxième marchandise a été retournée à un deuxième emplacement de présentation ;
recevoir des quatrièmes données identifiant au moins un client situé à proximité du deuxième emplacement de présentation lorsque la deuxième marchandise est retournée ; et
en réponse à une détermination du fait qu'à la fois (a) les quatrièmes données identifient un deuxième client et un troisième client et (b) les listes d'achats de chacun du deuxième client et du troisième client comprennent des données de vente de la deuxième marchandise, modifier les données de vente de la deuxième marchandise dans la liste d'achats du deuxième client d'enregistrement final en enregistrement provisoire et conserver les données de vente de la deuxième marchandise dans la liste d'achats du troisième client comme provisoirement enregistrées.

10. Procédé de gestion des ventes comprenant :
le stockage, pour chaque client, d'une liste d'achats comprenant un enregistrement d'achat pour chaque marchandise achetée par le client, chaque enregistrement d'achat comprenant un nombre d'unités et un drapeau d'enregistrement pour identifier si l'enregistrement d'achat est un enregistrement d'achat d'un enregistrement final ou un enregistrement d'achat d'un enregistrement provisoire ;
la détection, par un premier capteur, d'un mouvement d'une marchandise présentée dans un emplacement de présentation ;
l'identification, par un deuxième capteur, d'au moins un client situé à proximité de l'emplacement de présentation où le mouvement de la marchandise est détecté, l'au moins un client comprenant un premier client ;
en réponse au fait qu'un seul client est identifié, la définition du fait que le drapeau d'enregistrement de la marchandise dans la liste d'achats du premier client est un enregistrement final et la finalisation de l'enregistrement de données de vente de la marchandise dans une liste d'achats du premier client ;
l'enregistrement provisoire, en réponse à une pluralité de clients étant identifiés, les données de vente de la marchandise dans les listes d'achats des clients respectifs identifiés, et, pour chaque client identifié, la définition du fait que le drapeau d'enregistrement de la marchandise dans la liste d'achats est un enregistrement provisoire et ajouter le nombre d'unités de la marchandise ;
l'autorisation de la comptabilisation pour le premier client en réponse à la détermination du fait que la liste d'achats du premier client ne comprend pas des données de vente enregistrées provisoirement ;
l'interdiction de la comptabilisation du premier client en réponse à la détermination du fait que la liste d'achats du premier client comprend des données de vente enregistrées provisoirement
la fourniture, en réponse à la détermination du fait que la liste d'achats du premier client comprend des données de vente enregistrées provisoirement, par un dispositif d'affichage, d'une requête au premier client demandant un nombre d'unités de la marchandise que le premier client prévoit d'acheter ;
la correction, en réponse à la réception d'une réponse à la requête, du nombre d'unités de la marchandise dans les données de vente dans la liste d'achats du premier client et la modification des données de vente dans la liste d'achats du premier client en enregistrement final sans supprimer les données de vente provisoirement enregistrées dans une liste d'achats d'un deuxième client en réponse à une détermination du fait que le nombre d'unités de la marchandise dans les données de vente dans la liste d'achats du premier client n'est pas égal au nombre d'unités de la marchandise que le premier client prévoit d'acheter ; et
la modification, en réponse à la réception d'une réponse à la requête, des données de vente dans la liste d'achats du premier client en enregistrement final et la suppression des données de vente provisoirement enregistrées dans une liste d'achats d'un deuxième client en réponse à une détermination du fait que le nombre d'unités de la marchandise dans les données de vente dans la liste d'achats du premier client est égal au nombre d'unités de la marchandise que le premier client prévoit d'acheter.

11. Procédé de gestion des ventes selon la revendication 10, comprenant en outre :
la fourniture, par un dispositif d'affichage, d'une requête au premier client demandant si le premier client prévoit d'acheter la marchandise en réponse à la détermination du fait que la liste d'achats du premier client comprend des données de vente enregistrées provisoirement ; et
la suppression des données de vente de la marchandise de la liste d'achats du premier client en réponse à la réception d'une réponse à la requête indiquant que le premier client ne prévoit pas d'acheter la marchandise.

12. Procédé de gestion des ventes selon la revendication 10, comprenant en outre :
la fourniture, par un dispositif d'affichage, d'une requête au premier client demandant si le premier client prévoit d'acheter la marchandise en réponse à la détermination du fait que la liste d'achats du premier client comprend des données de vente enregistrées provisoirement ; et
la modification des données de vente dans la liste d'achats du premier client en enregistrement final et la suppression des données de vente provisoirement enregistrées dans une liste d'achats d'un deuxième client en réponse à la réception d'une réponse à la requête indiquant que le premier client prévoit d'acheter la marchandise.

13. Système de gestion des ventes comprenant :
un premier capteur configuré pour détecter le retrait d'une marchandise d'un emplacement de présentation ;
un deuxième capteur configuré pour identifier au moins un client situé à proximité de l'emplacement de présentation où le retrait de la marchandise est détecté par le premier capteur, l'au moins un client comprenant un premier client ;
une région de stockage configurée pour stocker, pour chaque client, une liste d'achats, la liste d'achats d'un client comprenant un enregistrement d'achat pour chaque marchandise achetée par le client, chaque enregistrement d'achat comprenant un nombre d'unités et un drapeau d'enregistrement pour identifier si l'enregistrement d'achat est un enregistrement d'achat d'un enregistrement final ou un enregistrement d'achat d'un enregistrement provisoire ; et
au moins un processeur configuré pour communiquer à la fois avec le premier capteur et le deuxième capteur et programmé pour conduire le procédé de gestion des ventes selon l'une quelconque des revendications 10 à 12.
